# EUROPEAN PATENT APPLICATION

(11) **EP 1 835 740 A1**
(43) Date of publication of application: **19.09.2007**
(21) Application number: 05814615.0
(22) Date of filing: 08.12.2005
(51) Int. Cl.: H04N 7/173, H04N 5/44, H04N 5/91

(54) **CONTENT PRESENTATION SYSTEM**

(30) Priority: 09.12.2004 JP 2004356116
(71) Applicant: MATSUSHITA ELECTRIC INDUSTRIAL CO., LTD., Osaka 571-8501 (JP)
(72) Inventor: KATAOKA, Mitsuteru c/o Matsushita Electric Industrial Co.,Ltd., Shiromi 1-chome,Chuo-ku, Osaka-shi Osaka 540-6319 (JP)
(74) Representative: Gassner, Wolfgang
(86) International application number: PCT/JP2005/022559
(87) International publication number: WO 2006/062161

(57) **Abstract**

There is provided a function for continuously viewing a content, which has been viewed using a viewing device, by using another viewing device. In a slave content presentation device, a user's viewing operation log is acquired for each content, and in a master content presentation device, this operation log is received as an input to generate information indicative of which portion of which content has not been viewed yet. Based on this information, a user can select the content, the viewing of which has not been finished, and view the remaining unviewed portion.

## Description

### TECHNICAL FIELD

The present invention relates to content presentation systems including, as constituent elements, single viewing devices and/or a plurality of viewing devices such as a digital broadcasting receiver, a hard disk video recorder, and a DVD video recorder which function to receive digital broadcasting, such as a streaming reproduction terminal and a personal computer which use broadband communication, or such as a portable viewer for reproducing a content stored in a bridge medium BM.

### BACKGROUND ART

As a means for allowing a plurality of users to view contents provided via digital broadcasting or a bridge medium BM, for example, content presentation devices such as a digital broadcasting receiver, a hard disk video recorder, a DVD video recorder, a streaming reproduction terminal, a personal computer and a portable viewer, and content presentation systems including the content presentation devices as principal elements have been conventionally put into practical use (See, for example, Patent Document 1/Non-Patent Document 1). It should be noted, for example, "content" is exemplarily described as a broadcast program consisting of image and sound in the present specification. However, the content may naturally be information, consisting of only image or sound, presented to a user.

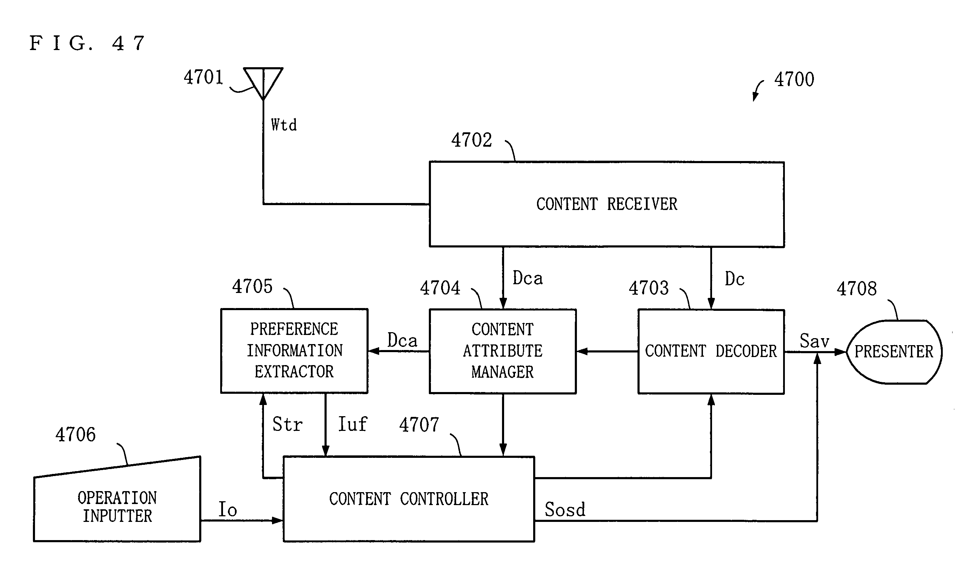

FIG. 47 schematically shows an exemplary structure of a conventional content presentation device for presenting contents, provided via digital broadcast waves, to respective users. A content presentation device 4700 includes: an antenna 4701; a content receiver 4702; a content decoder 4703; a content attribute manager4704; a preference information extractor 4705; anoperation inputter 4706; a content controller 4707; and a presenter 4708.

The antenna 4701 receives a digital broadcast wave and converts it into a broadcast signal Wtd, which is an electrical signal, to output the signal. The content receiver 4702 includes a tuner for a digital broadcast receiver and a transport layer decoder (not shown). Further, the content receiver 4702 extracts and separates content data Dc and content attribute data Dca from the broadcast signal Wtd outputted from the antenna 4701. The "content data Dc" means digital data constituting a content, while the "content attribute data Dca" means information about the substance of a content as typified by a character in the content (program) and the genre of the content. The content attribute data Dca also includes program sequence information such as EIT (Event Information Table) specified as STB-B10 by Association of Radio Industries and Business, which is the digital broadcast standard in Japan.

The content data decoder 4703 includes an MPEG Audio/Video decoder. Furthermore, the content decoder 4703 converts the content data Dc, outputted from the content receiver 4702, into an audio/video signal Sav in a data form presentable to a user, and outputs the signal.

The content data attribute manager 4704 manages the content attribute data Dca outputted from the content data receiver 4702. As the content data attribute manager 4704, a decoder for reproducing an electric program guide (EPG) from program sequence information such as EIT is used.

The operation inputter 4706 includes a button attached to a casing of the content presentation device 4700, or an infrared remote control and a light receiver thereof, for example. Further, the operation inputter 4706 generates, based on a user's operation of the button or the remote control, an operation instruction Io indicative of a user's operation instruction to the content presentation device 4700.

The content controller 4707 performs a dialogue process with a user based on the operation instruction Io operation instruction Io outputted from the operation inputter 4706, and manages the state transition of the overall content presentation device 4700. The content controller 4707 generates an OSD signal Sosd in order to perform the display of a GUI (Graphic User Interface) by an OSD (On Screen Display). In other words, the content controller 4707 changes, based on the operation instruction Io, the state transition of the content presentation device 4700 and the OSD display displayed on the presenter 4708.

Furthermore, the content controller 4707 realizes services that are based on a user's preference information Iuf outputted from the preference information extractor 4705. Such services include, for example, a function of enabling one-touch designation of a program frequently viewed by a user, without selecting it from the electric program guide.

The preference information extractor 4705 extracts the preference information Iuf concerning user's content presentation, based on a state transition signal Str outputted from the content controller 4707. Specifically, the preference information extractor 4705 observes the state (state transition signal Str) of the content controller 4707 and compares it with the content attribute data Dca retained in the content data attribute manager 4704, thereby deciding the content (content data Dc) a user is interested in.

For example, if a user has been viewing the same program (content data Dc) such as a drama series every time, it is determined that the user is interested in this drama series. Further, if a user's reservation-recording is partial to a particular genre, it is determined that the user is interested in this genre.

The presenter 4708 includes, for example, a CRT (Cathode Ray Tube) display and a speaker. Furthermore, the presenter 4708 presents to a user the audio/video signal Sav representing the content data Dc outputted from the content data decoder 4703, and the OSD signal Sosd outputted from the content controller 4707 by means of image or sound.
[Patent Document 1] Japanese Laid-Open Patent Publication NO. 2003-179852

### DISCLOSURE OF THE INVENTION

### PROBLEMS TO BE SOLVED BY THE INVENTION

As described above, the content presentation device 4700 is utilized by a plurality of users. Now, if an N number of users are each utilizing a single content presentation device 4700 (N is an arbitrary natural number), there exist the N content presentation devices 4700. An arbitrary one of these N content presentation devices 4700 is identified as the content presentation device 4700_M (M is an arbitrary natural number smaller than N). Similarly, each constituting element of the content presentation device 4700 is identified by adding a suffix such as N or M to each reference character thereof as required.

Specifically, in the content presentation device 4700_N, the content data Dc is subordinate to each content presentation device 4700_M. More specifically, even if the content data Dc has the identical substance, it is managed as being the unique data independently existing in the content presentation device 4700_M. In other words, the content data Dc is managed as the content data Dc_M.

Similarly, in the content presentation device 4700_L (L is an arbitrary natural number smaller than N and other than M), the content data Dc is managed as the content data Dc_L unique to the content presentation device 4700_L. That is, even if the content data Dc represents the content having the identical substance, the content data Dc is processed as different data, i. e. , the content data Dc_M and the content data Dc_L, in the content presentation device 4700_N.

Therefore, if the content data Dc has the identical substance, the realization of various operating environments, which should naturally be realized basically in response to the user's viewing needs, has been prevented. Detailed description will be made about this below. It should be noted that, in the present specification, the content having the identical substance as described above will be called "identical content", and the content data Dc representing the identical content will be called "identical content data DcI".

"Various operating environments, which should naturally be realized basically in response to the user's viewing needs" are divided broadly into the following first preferred operating environment through sixth preferred operating environment.

### (First Preferred Operating Environment)

The first preferred operating environment refers to an environment where the identical content (identical content data DcI) can be viewed as the identical content (identical content data DcI) between/among a plurality of the content presentation devices 4700_1 through 4700N. For example, the first preferred operating environment refers to an environment where, in the two independent content presentation device 4700_M and content presentation device 4700_L, the viewing history of the content data Dc_M, received by the content presentation device 4700_M, is passed on to the content presentation device 4700_L, and the content presentation can be continued in the content presentation device 4700_L as in the content presentation device 4700_M. In other words, this means that the content data Dc_M and the content data Dc_L are managed by the same viewing history.

For the convenience of the description, the three content presentation devices 4700 are identified as the first content presentation device 4700_L, the second content presentation device 4700_M, and the third content presentation device 4700_N.

In the case of browsing the content data Dc and viewing a content C thereof by the first content presentation device 4700_L (it should be noted that, for the simplification of the description, the processing of the content data Dc and the viewing of the content C will hereinafter be represented as "viewing of the content data Dc" in the present specification), if the viewing of all the content data Dc cannot be completed by the first content presentation device 4700_L, the content data Dc (content data Dc_L) and the viewing history thereof in the content presentation device 4700_L are stored in a bridge media BM. Then, in this environment, the bridge medium BM is set in the second content presentation device 4700_M, thus enabling the continual viewing in the content presentation device 4700_M from the time point when the viewing of the content data Dc_L in the content presentation device 4700_L has been interrupted.

Alternatively, without using a bridge medium BM, the content data Dc being viewed is respectively received by the first content presentation device 4700_L and the second content presentation device 4700_M via delivery means such as broadcasting, for example. Then, the viewing history of the content data Dc_L in the first content presentation device 4700_L is passed on as the viewing history of the content data Dc_M in the second content presentation device 4700_M. Consequently, in this environment, although the identical content data Dc is separately viewed by the two content presentation devices 4700, i.e., the content presentation device 4700_L and the content presentation device 4700_M, the identical content data Dc is viewed as if it is continuously viewed by the first content presentation device 4700_L.

However, in the conventional technology, a continuation or unviewed portion of the content data Dc that has been viewed by the first content presentation device 4700_L, for example, cannot be continuously viewed by the second content presentation device 4700_M. Therefore, even though the identical content data DcI exist in a plurality (an N number) of the viewing devices 4700_1 through 4700N, if a userwishes to view a continuation of the content data Dc, which has been partially viewed by the first content presentation device 4700_L, by using the second content presentation device 4700_M, it is necessary to perform a cue operation, such as fast-forwarding or rewinding, on the second content presentation device 4700_M by himself or herself to get to the position where the content data Dc has been viewed by the first content presentation device 4700_L.

More specifically, consideration will be given to the case where the identical program (identical content data DcI) exists as the content data Dc_L in the portable first content presentation device 4700_L with a small screen, and as the content data Dc_M in the stationary second content presentation device 4700_M connected to a big screen TV installed at home. While away from home, a user views the content data Dc_L using the first content presentation device 4700_L carried by the user, and after coming home, the user tries to view, using the second content presentation device 4700_M, a portion of the content data Dc_M subsequent to a portion of the content data Dc_L already viewed while away from home.

In this case, it is cumbersome because the user must operate the second content presentation device 4700_M to perform a so-called cue operation so as to get to a portion of the content data Dc_M corresponding to the starting point of the unviewed portion of the content data Dc_L. Furthermore, to the contrary, if a continuation of the content data Dc_M that has been partially viewed by the stationary second content presentation device 4700_M is viewed using the first content presentation device 4700_L serving as a portable device while away at home, it is also cumbersome because a cue operation for the content data Dc_L is similarly required.

### (Second Preferred Operating Environment)

The second preferred operating environment refers to an environment where, if the identical content (identical content data DcI) is wholly or partially viewed by a plurality of the content presentation devices 4700_1 through 4700N, the content data Dc_L being viewed in one content presentation device 4700_L can be recorded by reservation-recording in another content presentation device 4700_M, and the reservation-recorded content data Dc_M can be viewed by the still another content presentation device 4700_N.

Specifically, while a user is away from home, the content data Dc_L is viewed using the first content presentation device 4700_L carried by the user, and during that time, the content data Dc_M identical to the content data Dc_L is reservation-recorded by the second content presentation device 4700_M at home. Then, in this environment, a portion of the content data Dc_L, the viewing of which could not be completed while away from home, can be viewed with the content data Dc_M recorded in the second content presentation device 4700_M after coming home, or the content data Dc_M can be taken out from the second content presentation device 4700_M and viewed using the third content presentation device 4700_N.

Thus, in satisfying a user's desire of viewing the whole of the content data Dc utilizing a plurality of the content presentation devices 4700_1 through 4700_N in respectively different states, which is realized in the second viewing environment, i.e., in satisfying a user's desire of reviewing the content data Dc, provided via broadcasting or recording, by streaming utilizing communication, or inversely a user's desire of reviewing the content data Dc, which has been viewed by streaming, via broadcasting or recording, it has been cumbersome in the conventional technology because it has been required for a user to manually search the different content presentation devices 4700 for the target content data Dc.

### (Third Preferred Operating Environment)

The third preferred operating environment refers to an environment where the content data Dc is automatically selected in accordance with the user's liking, or the selection made by the user himself or herself is assisted. Specifically, in order to select the content data Dc in accordance with the user's liking (such as character, genre and theme), it is necessary to grasp the preference of the user. However, in the conventional technology, although it has been possible to determine, to some extent, that a user is interested in the content data Dc by confirming what the content data Dc heretofore viewed is, it has been difficult to accurately obtain the preference because it has been unable to know what component of the content data Dc the user is interested in. Further, since the preference is obtained on the basis of the content data Dc, it has been impossible to grasp which one of character, genre, and theme included in the content data DC has interested the user.

### (Fourth Preferred Operating Environment)

The fourth preferred operating environment refers to an environment where, while a user is viewing the content data Dc, a comment is attached to a predetermined portion of this content data Dc, and a notable portion is taken out from the content data Dc so as to be conveyed to the other user. In order to realize such an environment (function), conventionally, there has been no alternative but to view the content data Dc using the content presentation device 4700 identical to that used by the other user, or to send the editing result, obtained by superimposing a comment or cutting a scene using a device for editing the content data Dc, to the other user. The editing cannot be executed by anyone with ease, and needs a difficult operation that requires high knowledge and skill.

### (Fifth Preferred Operating Environment)

The fifth preferred operating environment refers to an environment where, when a user views the charged identical content data Dc using a plurality of the content presentation devices 4700_1 through 4700_N, a fee is charged on the basis of the content data Dc to be viewed irrespective of the number of the content presentation devices 4700. Specifically, even if the identical content data Dc, repeatedly broadcasted at different time periods (dates and times), are viewed separately by a user using a plurality of the content presentation devices 4700_1 through 4700_N at different times and places, a fee is not charged for the number of the content presentation devices 4700 used for the viewing but is charged for the viewed content data Dc.

Conventionally, a fee for viewing a charged program has been charged by transmitting, from the viewing device(s) to a server, information about which part of the program has been viewed. Therefore, if a user wishes to separately view the identical content data Dc using a plurality of the viewing devices, in the conventional technology, a fee has been charged repeatedly for the viewing devices. Specifically, in the case where the first half of the identical content data Dc is viewedutilizing the content presentation device 4700_L while away from home, for example, and the last half of the content data Dc is viewed using the other content presentation device 4700_M after coming home, it is not economical because a fee is charged repeatedly for the content presentation device 4700_L and for the content presentation device 4700_M.

In order to avoid such repeated fee charge, a fee for viewing the content data Dc is charged for one content presentation device 4700_L, and in addition, the content data Dc is recorded in this content presentation device 4700_L. Further, it is necessary to perform an operation, such as copying of this recorded content data Dc to the other content presentation device 4700_M, for the viewing thereof. Furthermore, there is no method for realizing a menu for a fee charge service that the fee is discounted if the content is viewed using a plurality of devices so as to reduce the burden of repeated fee charge.

Hence, an object of the present invention is to solve the conventional problems enumerated in the above-described first through fifth preferred operating environments, and to provide content presentation systems that realize the first through fifth preferred operating environments.

### SOLUTION TO THE PROBLEMS

A content presentation system including a slave content presentation device and a master content presentation device,
the slave content presentation device including:
operation input means through which an operation of a user is inputted;
first content control means for operating a content by being controlled by an output from the operation input means; and
operation log generation means for generating, based on the output from the operation input means, an operation log serving as a history of an operation for each content,
the master content presentation device including:
operation log interpretation execution means for receiving, as an input, the operation log and for outputting an interpretation result; and
second content control means for controlling the operation of the content, based on the interpretation result of the operation log interpretation execution means.

### EFFECT OF THE INVENTION

In the content presentation system according to the present invention, aviewing environment unified across a plurality of content presentation devices can be created, thus enabling the realization of convenience as if a content is viewed using a single content presentation device.

### BRIEF DESCRIPTION OF THE DRAWINGS

[FIG. 1] FIG. 1 is a block diagram showing a configuration of a content presentation system according to a first embodiment of the present invention.
[FIG. 2] FIG. 2 is an explanatory diagram illustrating an example of an operation log generated in a slave content presentation device in the content presentation system shown in FIG. 1.
[FIG.3] FIG. 3 is a flow chart illustrating an operation of a process for generating a viewing content data candidate list by a master content presentation device in the content presentation system shown in FIG. 1.
[FIG. 4] FIG. 4 is a flow chart illustrating an operation of a process for generating an operation log by the slave content presentation device in the content presentation system shown in FIG. 1.
[FIG. 5] FIG. 5 is an explanatory diagram illustrating an example of intermediary process data for creating the viewing content data candidate list generated by the master content presentation device in the content presentation system shown in FIG. 1.
[FIG. 6] FIG. 6 is an explanatory diagram illustrating an example of the viewing content data candidate list generated by the master content presentation device in the content presentation system shown in FIG. 1.
[FIG.7] FIG. 7 is a flow chart illustrating an operation of a process for merging operation logs by a content presentation system according to a second embodiment of the present invention.
[FIG. 8] FIG. 8 is an explanatory diagram illustrating an example of an operation log generated by a slave content presentation device in the content presentation system according to the second embodiment of the present invention.
[FIG. 9] FIG. 9 is an explanatory diagram illustrating an example of an operation log generated by a master content presentation device in the content presentation system according to the second embodiment of the present invention.
[FIG. 10] FIG. 10 is an explanatory diagram illustrating an example of an operation log merged by the content presentation system according to the second embodiment of the present invention.
[FIG. 11] FIG. 11 is an explanatory diagram illustrating an example of a viewing content data candidate list generated by the master content presentation device in the content presentation system according to the second embodiment of the present invention.
[FIG. 12] FIG. 12 is a block diagram showing a configuration of a content presentation system according to a third embodiment of the present invention.
[FIG. 13] FIG. 13 is a flow chart illustrating an operation of a process for generating a simplified operation log by a slave content presentation device in the content presentation system shown in FIG. 12.
[FIG. 14] FIG. 14 is an explanatory diagram illustrating an example of the simplified operation log generated by the slave content presentation device in the content presentation system shown in FIG. 12.
[FIG. 15] FIG. 15 is a flow chart illustrating an operation of a process for converting the simplified operation log into a normal operation log by a master content presentation device in the content presentation system shown in FIG. 12.
[FIG. 16] FIG. 16 is an explanatory diagram illustrating an example of content attribute data in the master content presentation device in the content presentation system shown in FIG. 12.
[FIG. 17] FIG. 17 is an explanatory diagram illustrating an example of the normal operation log converted from the simplified operation log by the master content presentation device in the content presentation system shown in FIG. 12.
[FIG. 18] FIG. 18 is a flow chart illustrating an operation of a process for adding a "reserve" operation request to a simplified operation log by a slave content presentation device in a content presentation system according to a fourth embodiment of the present invention.
[FIG. 19] FIG. 19 is an explanatory diagram illustrating an example of the simplified operation log generated by the slave content presentation device in the content presentation system according to the fourth embodiment of the present invention.
[FIG. 20] FIG. 20 is a flow chart illustrating an operation of a process for executing the "reserve" operation request in the simplified operation log by a master content presentation device in the content presentation system according to the fourth embodiment of the present invention.
[FIG. 21] FIG. 21 is an explanatory diagram illustrating an example of content attribute data in the master content presentation device in the content presentation system according to the fourth embodiment of the present invention.
[FIG. 22] FIG. 22 is a block diagram illustrating a configuration of a content presentation system according to a fifth embodiment of the present invention.
[FIG. 23] FIG. 23 is a flow chart illustrating an operation of a process for executing a "reserve" operation request in an operation log by a master content presentation device in the content presentation system shown in FIG. 22.
[FIG. 24] FIG. 24 is an explanatory diagram illustrating an example of content attribute data in the master content presentation device in the content presentation system shown in FIG. 22.
[FIG. 25] FIG. 25 is a flow chart illustrating an operation of generating summarized content data and a process for storing the summarized content data in a slave content presentation device by a master content presentation device in the master content presentation device in a content presentation system according to the fourth embodiment of the present invention.
[FIG. 26] FIG. 26 is an explanatory diagram illustrating an example of a content data list generated by the slave content presentation device in the content presentation system according to the sixth embodiment of the present invention.
[FIG. 27] FIG. 27 is a flow chart illustrating an operation of a process for adding a whole transfer request to an operation log by the slave content presentation device in the content presentation system according to the sixth embodiment of the present invention.
[FIG. 28] FIG. 28 is an explanatory diagram illustrating an example of the operation log generated by the slave content presentation device in the content presentation system according to the sixth embodiment of the present invention.
[FIG. 29] FIG. 29 is a flow chart illustrating an operation of a process for a whole transfer request in the content presentation system according to the sixth embodiment of the present invention.
[FIG. 30] FIG. 30 is a block diagram illustrating a configuration of a content presentation system according to a seventh embodiment of the present invention.
[FIG. 31] FIG. 31 is a flow chart illustrating an operation of a process for adding additional information to an operation log in the content presentation system shown in FIG. 30.
[FIG. 32] FIG. 32 is a flow chart illustrating an operation of a process for transferring the operation log from a first content presentation device to a second content presentation device in the content presentation system shown in FIG. 30.
[FIG. 33] FIG. 33 is a flow chart illustrating an operation of a process for executing the additional information by the second content presentation device in the content presentation system shown in FIG. 30.
[FIG. 34] FIG. 34 is a block diagram illustrating a configuration of a content presentation system according to an eighth embodiment of the present invention.
[FIG. 35] FIG. 35 is a flow chart illustrating an operation of a process for adding additional information to an operation log by a first content presentation device in the content presentation system shown in FIG. 34.
[FIG. 36] FIG. 36 is a flow chart illustrating an operation of a process for changing the additional information by a second content presentation device in the content presentation system shown in FIG. 34.
[FIG. 37] FIG. 37 is a flow chart illustrating an operation of a process for executing the additional information by a third content presentation device in the content presentation system shown in FIG. 34.
[FIG. 38] FIG. 38 is a block diagram illustrating a configuration of a content presentation system according to a ninth embodiment of the present invention.
[FIG. 39] FIG. 39 is a flow chart illustrating an operation of a process for adding additional information to an operation log by a first content presentation device in the content presentation system shown in FIG. 38.
[FIG. 40] FIG. 40 is a flow chart illustrating an operation of a process for changing the additional information by a second content presentation device in the content presentation system shown in FIG. 38.
[FIG. 41] FIG. 41 is a flow chart illustrating an operation of a process for extracting detailed preference information by a master content presentation device in a content presentation system according to a tenth embodiment of the present invention.
[FIG. 42] FIG. 42 is a block diagram illustrating a configuration of a content presentation system according to an eleventh embodiment of the present invention.
[FIG. 43] FIG. 43 is a flow chart illustrating an operation of a process for uploading an operation log to a server by the content presentation device shown in FIG. 42.
[FIG. 44] FIG. 44 is a flow chart illustrating an operation of a detailed preference information extraction process and a rating calculation process by the server in the content presentation system CPS shown in FIG. 42.
[FIG. 45] FIG. 45 is a flow chart illustrating an operation of a merging process in a content presentation system according to a twelfth embodiment of the present invention.
[FIG. 46] FIG. 46 is an explanatory diagram illustrating an example of a fee charge rule in the content presentation system shown in FIG. 45.
[FIG. 47] FIG. 47 is a block diagram illustrating a configuration of a content presentation device in a conventional technology.
[FIG. 48] FIG. 48 is an external perspective view showing a portable TV device implemented as an example of the slave content presentation device in the content presentation system according to the first embodiment.
[FIG. 49] FIG. 49 is an external perspective view showing a portable TV device implemented as an example of the slave content presentation device in the content presentation system according to the third embodiment.
[FIG. 50] FIG. 50 is an explanatory diagram showing an example of a message displayed on a presenter of a stationary TV device implemented as the master content presentation device in the content presentation system according to the fourth embodiment.
[FIG. 51] FIG. 51 is an explanatory diagram showing an example of a reservation-recording message displayed on a presenter of a portable TV device implemented as the slave content presentation device in the content presentation system according to the sixth embodiment.
[FIG. 52] FIG. 52 is an explanatory diagram showing an example of a content data list displayed on the presenter of the portable TV device implemented as the slave content presentation device in the content presentation system according to the sixth embodiment.
[FIG. 53] FIG. 53 is an explanatory diagram showing a display example presented on a presenter of a portable TV device implemented as the content presentation device in the content presentation system according to the seventh embodiment.
[FIG. 54] FIG. 54 is an explanatory diagram showing an example of additional information displayed in the content presentation system according to the seventh embodiment.
[FIG. 55] FIG. 55 is an explanatory diagram showing a display example presented on a presenter of a stationary TV device implemented as the content presentation device according to the seventh embodiment.

### DESCRIPTION OF THE REFERENCE CHARACTERS

CPS1 through CPS12 content presentation system
100, 4700 content presentation system
100_1 first content presentation device
100_2 second content presentation device
100_n n-th content presentation device
110a, 110c, 110e, 110g, 110h, 110i, 110k slave content presentation device
111 bridge medium slot
112, 122, 1223 operation log interpretation executor
113 operation log storage
114, 124, 1211 operation log generator
1213, 1223, 2222, 3001, 3421, 3821, 4211 operation log interpretation executor
115 content storage
120a, 120c, 120e, 120g, 120h, 120i, 120k master content presentation device
1211 transmitter-receiver
1212 simplified operation log generator
4701 antenna
4703 content data decoder
4704 content data attribute manager
4706 operation inputter
4708 presenter
5000a, 5000c, 5000e, 5000g, 5000h, 5000i, 5000k content controller
BM bridge medium

### BEST MODE FOR CARRYING OUT THE INVENTION

### (First Embodiment)

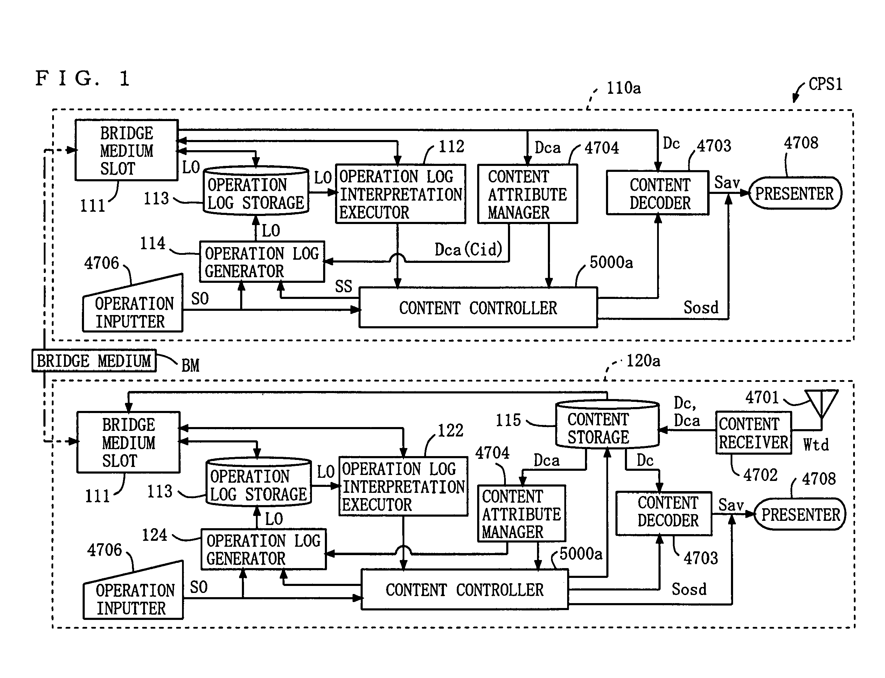

Hereinafter, a content presentation system according to an embodiment of the present invention will be described with reference to FIG. 1, FIG. 2, FIG. 3, FIG. 4, FIG. 5 and FIG. 6. The present embodiment provides a content reproducing system that realizes the above-described first preferred operating environment. Specifically,in reproducing identical content data Dc using a plurality of conventional content presentation devices 4700_1 through 4700_N, a content presentation system CPS1 functions to allow a continuation or unviewed portion of the content data Dc, which has been viewed in one content presentation device 4700_L, to be continuously viewed in the other content presentation device 4700_M without performing any special operation.

That is, the content reproducing system CPS1 realizes an operating environment where the identical content data Dc can be viewed with an operation feeling that the identical content data Dc is referenced in a shared manner between/among a plurality of the content presentation devices 4700_1 through 4700_N. To this end, viewing history information concerning the content data Dc is created, and is used in common between/among a plurality of the content presentation devices 4700_1 through 4700_N.

As shown in FIG. 1, the content presentation system CPS1 in the first embodiment includes the two content presentation devices 4700, i.e., a slave content presentation device 110a and a master content presentation device 120a. It should be noted that the following description will be focused on elements required for realizing the functions in the present embodiment, and therefore, the slave content presentation device 110a and the master content presentation device 120a are configured slightly differently, whereas they may be configured exactly identically.

The slave content presentation device 110a includes: a bridge medium BM slot 111; an operation log interpretation executor 112; an operation log storage 113; an operation log generator 114; a content data decoder 4703; a content data attribute manager 4704; an operation inputter 4706; a content controller 5000a; and a presenter 4708. It should be noted that the content data decoder 4703, the operation inputter 4706 and the presenter 4708 are configured similarly to those in the content presentation device 4700 described with reference to FIG. 47.

The master content presentation device 120a includes: a bridge medium BM slot 111; an operation log interpretation executor 122; an operation log storage 113; an operation log generator 124; a content storage 115; an antenna 4701; a content receiver 4702; a content data decoder 4703; a content data attribute manager 4704; an operation inputter 4706; a content controller 5000a; and a presenter 4708. It should be noted that the antenna 4701, the content receiver 4702, the content data attribute manager 4704, the content data decoder 4703, and the operation inputter 4706 are configured similarly to those in the content presentation device 4700 described with reference to FIG. 47. Furthermore, the bridge medium BM slot 111, the operation log storage 113 and the operation log generator 114 are configured similarly to those in the above-described slave content presentation device 110a.

First, the constituent elements of the slave content presentation device 110a will be described. The bridge medium BM slot 111 reads and writes digital data from and on a bridge medium to be inserted. The identical bridge medium BM is read and written in both of the bridge medium BM slot 111 in the slave content presentation device 110a, and the bridge medium BM slot 111 in the master content presentation device 120a described below, thus exchanging digital data between the slave content presentation device 110a and the master content presentation device 120a.

As the bridge medium BM, an SD (Secure Digital) memory card, a memory card such as a Smart Media or Compact Flash (registered trademark) card, or a Buluetooth wireless communication card such as an SD-IO (Secure Digital-Input Output) card may be used. Furthermore, a drive for reading and writing data from and on packaged media, as typified by an optical disk such as a DVD-RAM (Digital Versatile Disc-Random Access Memory), may be used as the bridge medium BM slot 111. Similarly, a drive for reading and writing data from and on, for example, a magnetic disk, as typified by a removable hard disk drive, may also be used as the bridge medium BM slot 111.

The operation log interpretation executor 112 is connected to the bridge medium BM slot 111, the operation log storage 113, and the content controller 5000a. The operation log interpretation executor 112 manages an operation log LO which is information stored in the operation log storage 113, and interprets information recorded in a content operation log row LLO to perform a process for realizing a viewing environment designated by a user.

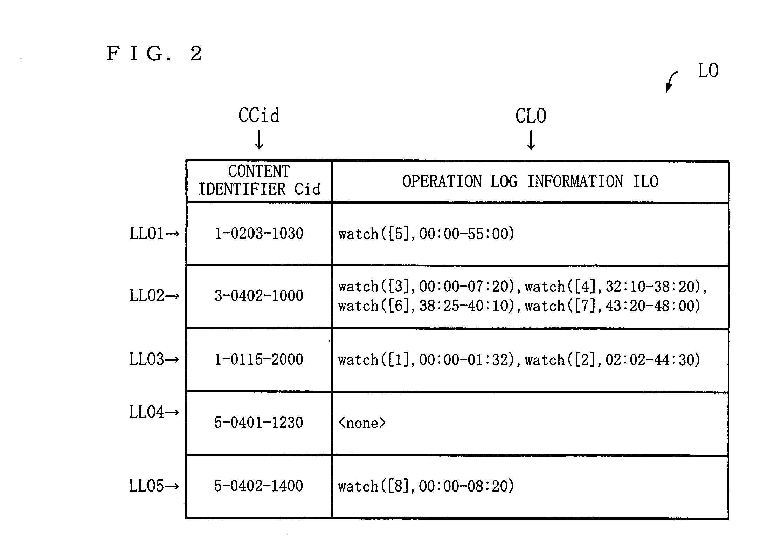

The operation log LO will be described with reference to FIG. 2. The operation log LO has content operation log rows LLOn (n is an arbitrary natural number) for recording operation log information ILO for the respective content data Dc . The content operation log rows LLOn each include: a content identifier column CCid for storing a content identifier Cid serving as information for identifying each content C (content data Dc) ; and an operation list column CLO for storing operation information IO. It should be noted that, in the operation list column CLO, 0 or more of the operation information 10 serving as an element of the operation log information ILO is stored. It should be noted that, in FIG. 2, the five content operation log rows LLO1, LO2, LO3, LO4, and LO5 are exemplarily illustrated.

The slave content presentation device 110a distinguishes the content data Dc, which is subject to viewing by a user, based on the content identifier Cid. It should be noted that the content data Dc is digital data whose substance changes in accordance with the user's viewing time, such as a TV program, an animation using graphics, or radio broadcasting using only sound. It should be noted that even a group of Web pages, which are mutually linked via hyperlink, can be regarded as the content data Dc as long as each page can be mapped onto the time axis.

Further, the operation log information ILO represents the substance and timing of an operation performed by a user in the slave content presentation device 110a and the master content presentation device 120a. By using the content operation log row LLO1 as a specific example, the information included in the operation log LO will be described. Since "1-0402-1030" is stored in the content identifier column CCid of the content operation log row LL01, it is represented that operation log information ILO1 of the content data Dc, whose content identifier Cid is "1-0402-1030", is stored in the content operation log row LLO1. For example, "1-0402-1030" represents a TV program that starts at "10: 30 hr" on "Apr. 2" on a broadcast channel "1".

In other words, in this column, each content identifier Cid consists of a nine-digit number separated by two hyphens. The first digit represents the broadcast channel providing the content C (program), the subsequent four digits represent the date on which the broadcast of the content C (program) starts, and the subsequent four digits represent the time (hour and minute) at which the broadcast of the content C (program) starts. However, if it is necessary to circumstantially identify, for example, the number of broadcast channels, the year in which the broadcast starts, and the second at which the broadcast starts, the number of digits of each content identifier Cid may be set to be increased. Similarly, if it is necessary to identify further items, the number of digits or hyphens may be increased, thus enabling addition of such items.

In the operation list column CLO of the content operation log row LL01, one piece of operation log information ILO1 representing "watch ( [5] , 00: 00-55 : 00)" is stored. "watch ( [5], 00: 00-55: 00)" represents that a user has viewed ("watched") the program of the content data Dc, whose content identifier Cid is 1-0402-1030, from a head portion thereof starting from 0 min 0 sec to 55 min and 00 sec. Further, [5] represents the temporal order of execution of each operation in the operation log information ILO1. In this example, it is represented that the execution is done in ascending order of the number surrounded by []. In this sense, the number surrounded by [] will be called an "execution sequence Sq". As the execution sequence Sq, the executed time point may be used instead of directly storing the number representing the order such as [5].

Further, in the operation list columns CLO of the content operation log rows LLO2, LL03, LLO4 and LL05, four pieces of the operation log information ILO2, two pieces of operation log information ILO3 , no piece of the operation log information ILO4, and one piece of the operation log information ILO5 are stored in this order. From the operation log LO exemplarily illustrated in FIG. 2, the following viewing history can be read. First, a program on Channel 1 is viewed from 20 hr 00 sec for 1 minute and 32 seconds, i.e., to 20 hr 1 min 32 sec, on Jan. 15, and then a program on Channel 1 is viewed from 20 hr 2 min 2 sec to 20 hr 44 min 30 sec.

Then, on Apr. 2, a program on Channel 3 is viewed from 10 hr 00 min for 7 minutes and 20 seconds, i.e., to 10 hr 7 min 20 sec, and a program on Channel 3 is viewed from 10 hr 32 min 10 sec to 10 hr 38 min 20 sec. Furthermore, a program on Channel 3 is viewed from 10 hr 38 min 25 sec to 10 hr 40 min 10 sec, and a program on Channel 3 is viewed from 10 hr 43 min 20 sec to 10 hr 48 min 00 sec.

Then, after a program on Channel 5 has been viewed from 14 hr 00 min 00 sec to 14 hr 08 min 20 sec on the same day, a program on Channel 3 is viewed from 10 hr 38 min 25 sec to 10 hr 40 min 10 sec on the same day, and a program on Channel 7 is viewed from 10 hr 43 min 20 sec to 10 hr 48 min on the same day. Furthermore, on Apr. 2, a program on Channel 8 is viewed from 14 hr 00 min 00 sec for 8 minutes and 20 seconds, i.e., to 14 hr 08 min 20 sec. It should be noted that no program is viewed from 12 hr 30 sec on Apr. 1.

Referring again to FIG. 1, the operation log storage 113 stores the operation log LO generated as described above. The operation log storage 113 can be formed by a storage medium that allows digital data to be randomly accessible, such as a semiconductor memory, an HDD (Hard Disk Drive) or a DVD-RAM.

The operation log generator 114 generates the operation log LO based on: an operation signal SO outputted from the operation inputter 4706; content attribute data Dca outputted from the content data attribute manager 4704; and a content control state signal SS, which is outputted from the content controller 5000a and indicative of the state of the content controller 5000a. Specifically, the operation log generator 114 generates, based on the content attribute data Dca, the operation log LO and outputs it to the operation log storage 113.

Moreover, the operation log generator 114 generates, based on the operation signal SO, an operation log element indicative of the user operation, and adds it to the content operation log row LLO of the content operation log row LO stored in the operation log storage 113. When the element is added to the operation log, it is detected, based on the content control state signal SS, what kind of an operation has been represented by an input to the operation inputter 4706.

Specifically, the operation inputter 4706 notifies the pressing of a decision button thereof to the content controller 5000a. Then, it is determined that the content controller 5000a at this timing is in a state where the viewing start of the content data Dc is represented, thus recognizing the viewing start operation of the content data Dc.

Further, the value of the content identifier Cid of the content data Dc for starting reproduction is obtained from the content data attribute manager 4704. By putting together the above-described pieces of information, the operation log generator 114 can add the operation log LO to the operation log storage 113.

Next, the constituent elements of the master content presentation device 120a will be described. It should be noted that the description of the constituent elements common to the slave content presentation device 110a will be omitted unless it is particularly necessary. The content storage 115 accumulates the content data Dc and the content attribute data Dca, which are outputted from the content data receiver 4702. The content storage 115 may be a hard disk drive, a removable recording medium such as DVD-RAM (Digital Versatile Disk-Random Access Memory), or a semiconductor memory such as a Flash memory or RAM (Random Access Memory).

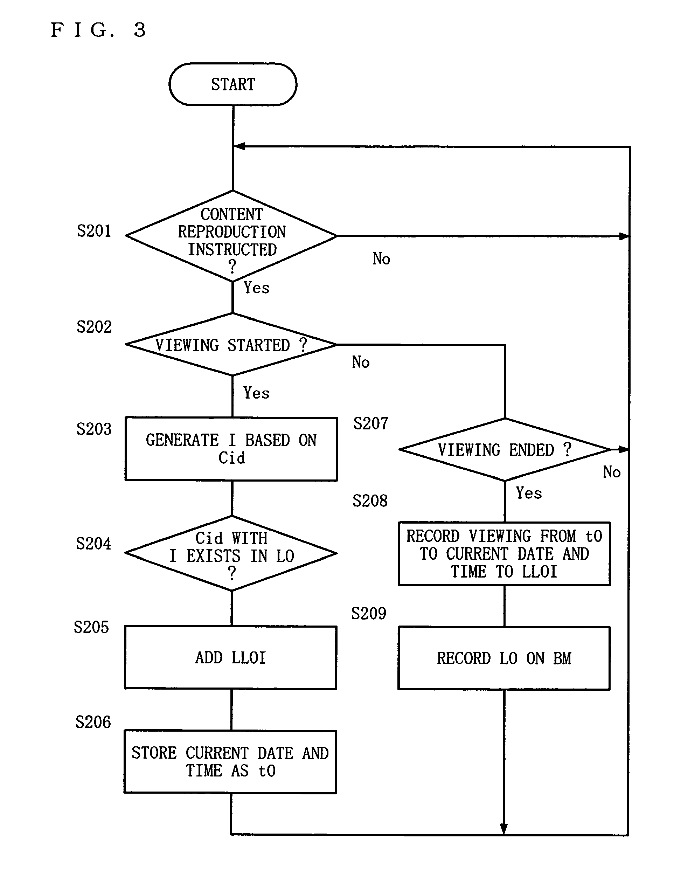

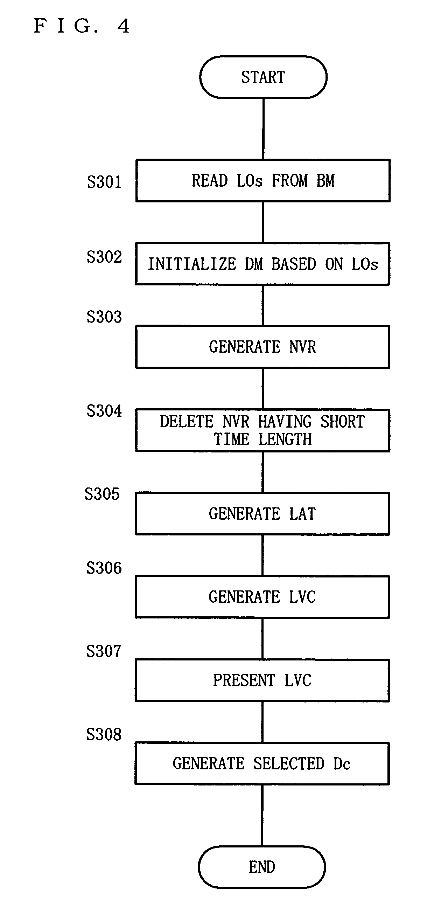

Referring to FIGS. 3 and 4, the content presentation operations of the slave content presentation device 110a and the master content presentation device 120a in the content presentation system CPS1 will be described. It should be noted that the present embodiment is characterized by making the operation log LO common to the content data Dc in the slave content presentation device 110a and the master content presentation device 120a. The operation log LO for this purpose is generated in the slave content presentation device 110a. Then, the generated operation log LO is used for the reproduction of the content data Dc in the master content presentation device 120a.

FIG. 3 shows a flow chart illustrating the operation of generating the operation log LO in the slave content presentation device 110a. In the slave content presentation device 110a, the generation of the operation log LO is started during the viewing of the content data Dc.
First, in Step S201, the operation log generator 114 determines, based on the input operation signal SO from the operation inputter 4706, whether or not a user's operation has been·performed. At the point in time when the operation is performed, the control proceeds to the next Step S202.

In Step S202, it is determined whether or not the operation detected in Step S201 indicates the start of viewing of the content data Dc. In the case of Yes, the control proceeds to the Step S203, and in the case of No, the control proceeds to Step S207.

In Step S203, the operation log generator 114 references the content attribute data Dca stored in the content data attribute manager 4704, thus obtaining the content identifier Cid of the content data Dc that is subject to viewing start. For the sake of convenience, the obtained value is stored as a variable I. Then, the control proceeds to the next Step S204.

In Step S204, it is determined whether or not an item of the variable I exists in the content identifier Cid of the operation log LO in the slave content presentation device 110a, which is stored in the operation log storage 113. In the case of Yes, the control proceeds to Step S205, and in the case of No, the control skips Step S205 to proceed to Step S206.

In Step S205, the item of the variable I for the content identifier Cid, which has been determined to be nonexistent in Step S203 described above, is newly added to the operation log LO. Then, the control proceeds to the next Step S206.

In Step S206, the current date and time are stored as a variable to by the operation log generator 114. Then, the control returns to Step S201.

On the other hand, if it is determined that the viewing of the content by a user is not started in Step S202 described above, i.e., in the slave content presentation device 110a, the control proceeds to Step S207.

In Step S207, it is determined whether or not the operation detected in Step S202 indicates the end of viewing of the content data Dc. In the case of Yes, the control proceeds to Step S208. In the case of No, the control skips Step S208 and Step S209 to return to Step S201.

In Step S208, the operation information IO, indicative of the viewing from t0 to the current date and time, is added to the operation log information ILO with the item of I in the content identifier Cid of the operation log LO, thus updating the operation log LO. Then, the control proceeds to the next Step S209.

In Step S209, the operation log LO updated in Step S208 is outputted to the bridge medium BM slot 111 via the operation log storage 113, and is recorded on the bridge medium BM. Then, the control returns to Step S201.

Although information indicative of the temporal order of each operation (e.g., [5] is indicative of the fifth) is added to the operation log LO, the information indicative of the order is added in Step S206. Thus, when the slave content presentation device 110a is in operation, the operation log LO is updated. It should be noted that, in the present example, every time the operation log LO is updated, the updated operation log LO is recorded on the bridge medium BM (Step S209), whereas at the instruction of a user or at the end of the operation of the slave content presentation device 110a, the latest operation log LO at this time point may be recorded on the bridge medium BM.

Next, referring to a flow chart shown in FIG. 4, a content reproduction process performed by the master content presentation device 120a will be described. Specifically, based on the operation log LO generated by the slave content presentation device 110a and inputted via the bridge medium BM, the master content presentation device 120a generates candidates for the content data Dc to be reproduced, and present them to a user. Then, the master content presentation device 120a performs the content reproduction in response to a user's instruction for selecting which one of the presented candidates is to be reproduced.

In the present flow chart, there exist one operation log LO generated by the slave content presentation device 110a, and the other operation log LO generated by the master content presentation device 120a based on said one operation log LO. Therefore, in order to avoid confusion, where necessary, the operation log LO generated by the slave content presentation device 110a will be described as an operation log LOs while the operation log LO generated by the master content presentation device 120a will be described as an operation log LOm so as to distinguish them from each other. It should be noted that, as for various parameters other than the operation log LO, where necessary, a suffix "s" is attached to the parameter generated by the slave content presentation device 110a while a suffix "m" is attached to the parameter generated by the master content presentation device 120a, thus distinguishing them from each other.

First, in Step S301, the operation log LO, generated by the slave content presentation device 110a and stored in the bridge medium BM, is read therefrom. Specifically, the operation log LO is written on the bridge medium BM inserted into the bridge medium BM slot 111 of the slave content presentation device 110a (Step S209), and then the bridge medium BM, on which the operation log LO is written, is inserted into the bridge medium BM slot 111 of the master content presentation device 120a so that the operation log LO is read into the operation log interpretation executor 122. Then, the control proceeds to the next Step S302.

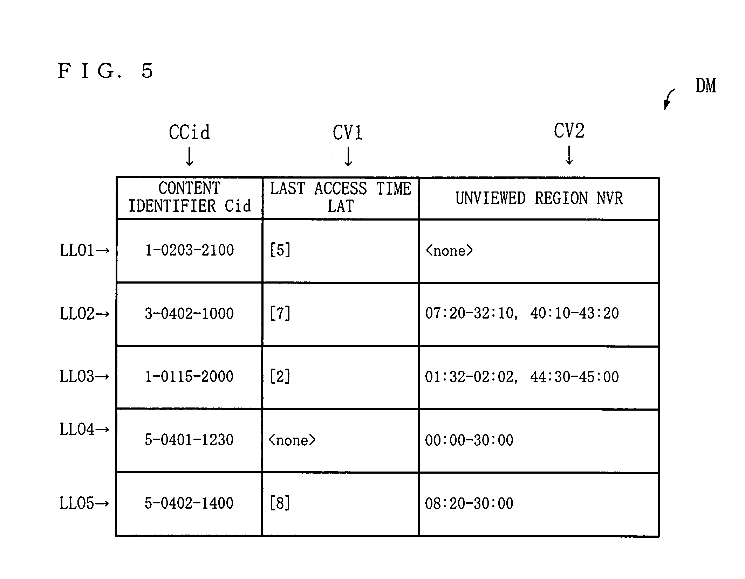

In Step S302, based on the operation log LO read in Step S301, the operation log interpretation executor 122 initializes intermediary process data DM for creating the candidates for the viewing content data Dc. FIG. 5 shows an example of the intermediary process data DM in the master content presentation device 120a according to the present embodiment. As shown in this diagram, the intermediary process data DM consists of the values obtained by initializing the operation log LO, described with reference to FIG. 2, in Step S302.

Similarly to the operation log LO, the intermediary process data DM has a data structure in tabular form including content operation log rows LLO1 through LL05 and a content identifier column CCid. It is to be noted that, instead of the operation list column CLO in the operation log LO, the intermediary process data DM is provided with viewing circumstance columns CV1 and CV2. Last access times LAT are listed in the viewing circumstance column CV1, while unviewed regions NVR are listed in the viewing circumstance column CV2.

The content identifiers Cid of the operation log LO are copied to the content identifiers Cid in the content identifier column CCid of the intermediary process data DM. Further, the values of the last access times LAT and the unviewed regions NVR listed in the viewing circumstance column CV1 and the viewing circumstance column CV2, respectively, are obtained as a result of an initialization process performed on the operation log LO. It should be noted that, in the present step, the intermediary process data DM, in which the columns for the values of the last access times LAT and the unviewed regions NVR are blank, is created, and then the control proceeds to the next Step S303.

In Step S303, the unviewed region NVR is obtained for each content data Dc. As the unviewed region NVR in the viewing circumstance column CV2, a time portion, which has not been viewed in the operation list column CLO of the operation log information ILO, is recorded for each corresponding content data Dc. In this step, the total time length for each content data Dc is confirmed by allowing the operation log generator 124 to reference the value retained in the content data attribute manager 4704.

For example, in order to generate the unviewed regions NVR from the operation log information ILO, the fact that the content data Dc has a total time length of 48 minutes concerning the content operation log row LLO2 is confirmed from the content data attribute manager 4704; as a result, relative to the starting point of the content data Dc, the time from 7 min 20 sec to 32 min 10 sec, the time from 38 min 20 sec to 38 min 25 sec, and the time from 40 min 10 sec to 43 min 20 sec are extracted as the unviewed regions. It should be noted that, although the time "from 38 min 20 sec to 38 min 25 sec" is not shown in FIG. 5, the description will be made about this in relation to the next Step S304. Furthermore, as for the content operation log row LL01, as shown in the associated unviewed region NVR, the value "<none>" is written in the sense that there is no unviewed region NVR of the content data Dc. Then, the control proceeds to the next Step S304.

In Step S304, the unviewed region NVR having a short time length less than the threshold value is deleted. For example, the time length of the unviewed region NVR from 38 min 20 sec to 38 min 25 sec mentioned above is as short as 5 seconds, and is therefore ignored, resulting in the obtainment of the unviewed regions NVR. Hence, FIG. 5 shows the intermediary process data DM that has been subjected to the process in the present step. Then, the control proceeds to the next Step S306.

In Step S305, the last access time LAT for each content data Dc is obtained. As the last access times LAT in the viewing circumstance column CV1, among the values indicative of the temporal order of the operation information IO of the operation log information ILO, the recent one (i.e., the greatest value in the present example) is selected. For instance, if the content operation log row LLO2 is taken as an example, the greatest value [7] is selected since the order of the four pieces of the operation information IO is as follows: [3], [4], [6] and [7]. Similarly, the last access times LAT determined for the respective content operation log rows LLO are listed in the viewing circumstance column CV1, thus completing the intermediary process data DM. Then, the control proceeds to the next Step S306.

In Step S306, viewing candidates are decided based on the last access times LAT and the unviewed regions NVR in the completed intermediary process data DM. As already described above, the unviewed region NVR having a short time length less than the threshold value is ignored. For example, if 5 minutes is set as the threshold value, the unviewed regions NVR in the content operation log row LLO3 are ignored because they are each shorter than 5 minutes, i.e., less than the threshold value, as follows: 2 min 2 sec - 1 min 32 sec = 30 sec, and 45 min - 43 min 30 sec = 1 min 30 sec. Furthermore, the unviewed region NVR in the content operation log row LLO1 is similarly ignored because its value is <none>.

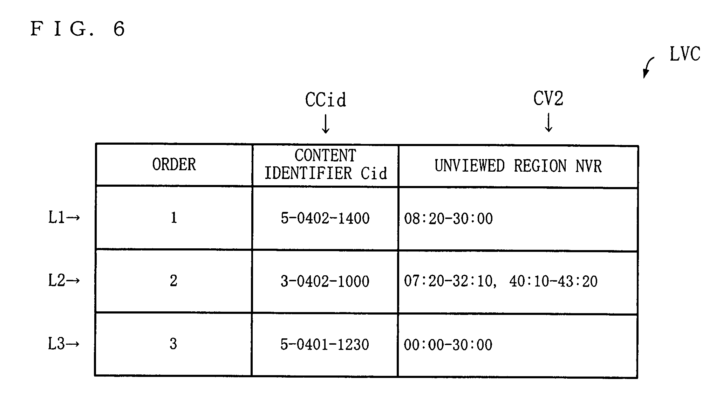

Next, the rows having the unignored unviewed regions NVR are sorted in the order in which the last access times LAT are recent. It is to be note that, as in the content operation log row LLO4, the item having "<none>" as the value of the last access time LAT is regarded as the item indicative of the predetermined order since it has not been viewed at all. Consequently, the data indicative of the viewing candidates is generated. This data will be called a "viewing candidate list LVC". FIG. 6 shows an example of the viewing candidate list LVC. Then, the control proceeds to the next Step S307.

In Step S307, the viewing candidate list LVC is presented to a user by the presenter 4708 of the master content presentation device 120a, thus facilitating the selection of the content data Dc to be reproduced. Then, the control proceeds to the next Step S308.

In Step S308, the reproduction of the content data Dc selected by the user is started based on the operation log LO. Then, the control is brought to an end.

As described above, in the content presentation system CPS1 according to the first embodiment, the content data Dc, which has been partially viewed by the slave content presentation device 110a or which has not been viewed at all, is displayed as the viewing candidate on the master content presentation device 120a. Furthermore, all the user has to do is to select the desired content data Dc out of the displayed viewing candidates, thus allowing the content data Dc, which has been partially viewed or which has not been viewed, to be read from the content storage 115 and to be reproduced and viewed from the starting point or the spot where the viewing has been interrupted in the slave content presentation device 110a.

That is, in the present embodiment, the data itself of the content data Dc exists in the content data decoder 4703 of the slave content presentation device 110a, and in the content storage 115 of the master content presentation device 120a. However, a continuation of the content data Dc, which has been viewed by the slave content presentation device 110a, can be continuously viewed by the master content presentation device 120a, i.e., the content data Dc can be shared between/among a plurality of devices having a sort of a viewing context. Therefore, instead of a conventional operation feeling that the content data Dc is subordinate to a device, it is possible to virtually obtain an operation feeling that the identical content data Dc, first, exists as an entity and is operated as if being shared between/among a plurality of devices.

It should be noted that the content data Dc viewable by the slave content presentation device 110a is obtained/received via means such as the antenna 4701 and the content receiver 4702, and is accumulated in the content storage 115 by the master content presentation device 120a. Further, although omitted in FIG. 1 due to space limitations, the slave content presentation device 110a may also be provided with means such as the antenna 4701 and the content receiver 4702 similarly to the master content presentation device 120a as will be appreciated from the foregoing description.

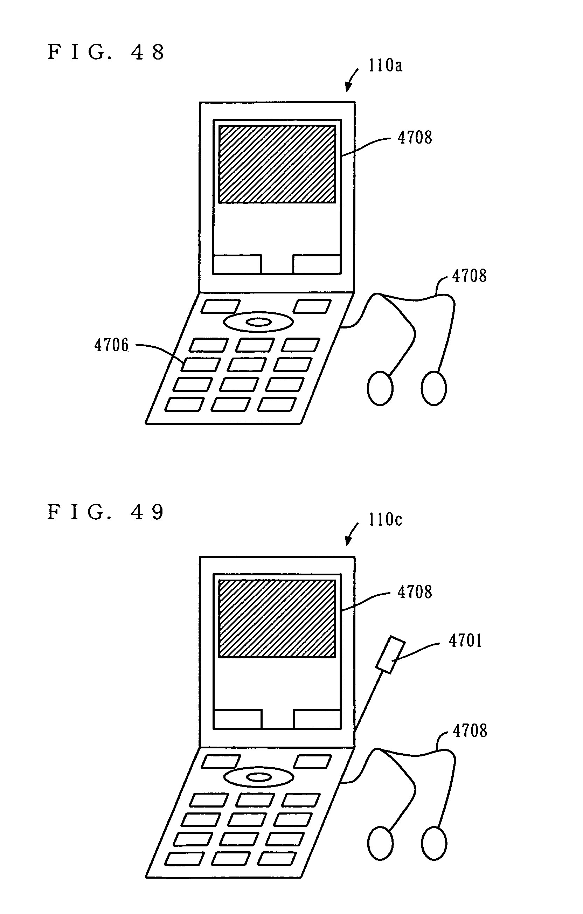

FIG. 48 shows an external appearance of a portable TV device implemented as the slave content presentation device 110a. As shown in this diagram, it can be seen from the external appearance of the portable TV device 110a that a liquid crystal monitor and earphones constitute the presenter 4708, and a keyboard constitutes the operation inputter 4706. It should be noted that the other constituent elements of the slave content presentation device 110a shown in FIG. 1 are contained inside the portable TV device.

### (Second Embodiment)

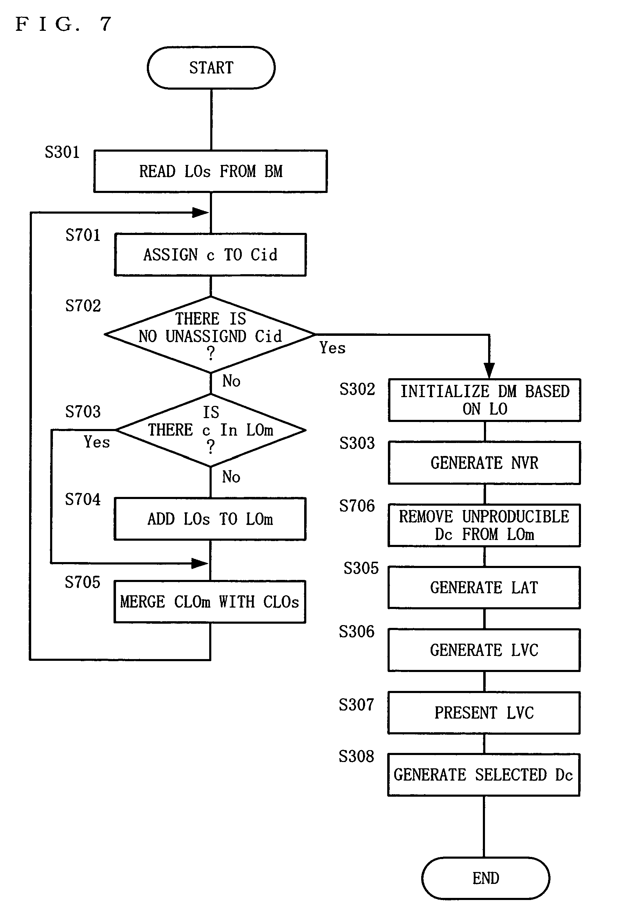

Hereinafter, a content presentation system according to a second embodiment of the present invention will be described with reference to FIG. 7, FIG. 8, FIG. 9, FIG. 10 and FIG. 11. The hardware configuration of a content presentation system CPS2 according to the present embodiment is similar to that of the content presentation system CPS1 according to the first embodiment shown in FIG. 1, and therefore, the description thereof will be omitted. It is to be noted that, in addition to the functions of the content presentation system CPS1, the content presentation system CPS2 functions to enable the viewing with an operation feeling that the identical content data Dc is referenced in a shared manner even if a viewing operation is performed between/among a plurality of, i.e., two or more, devices.

Therefore, the present embodiment differs from the first embodiment in the operation of the operation log interpretation executor 122 of the master content presentation device 120a. In this sense, the operation log interpretation executor of the content presentation system CPS2 will be called an "operation log interpretation executor 122b" in order to distinguish it from the operation log interpretation executor 122 of the content presentation system CPS1. Specifically, the operation log interpretation executor 122b functions to merge the two operation logs LO generated by the different content presentation devices (i.e., the slave content presentation device 110a and the master content presentation device 120a in the present example) while maintaining the viewing circumstances recorded in the respective operation logs LO.

Referring to a flow chart shown in FIG. 7, an operation of merging the two operation logs LO by the operation log interpretation executor 122b will be described. In FIG. 7, new Steps S701, S702, S703, S704 and S705 are added between Step S301 and Step S302 of the flow chart shown in FIG. 4. Further, Step S304 is replaced with new Step S706. It should be noted that, in order to avoid redundancy, only points different from the first embodiment will be described unless it is particularly necessary.

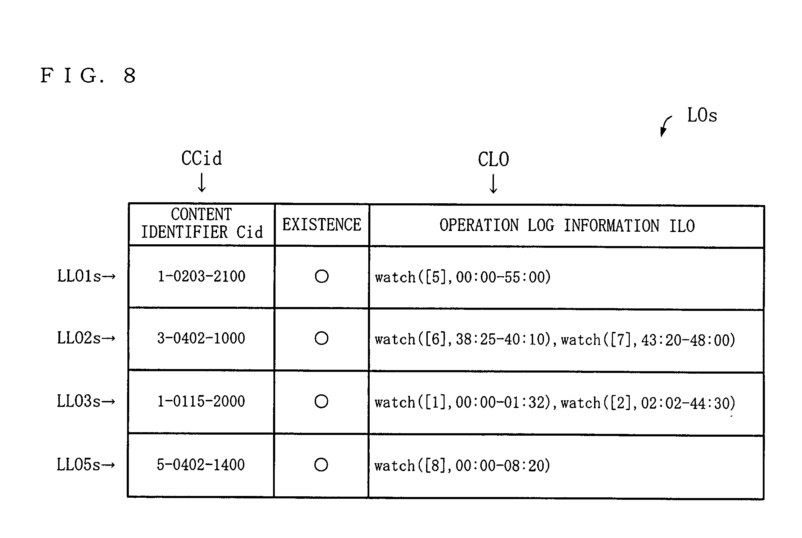

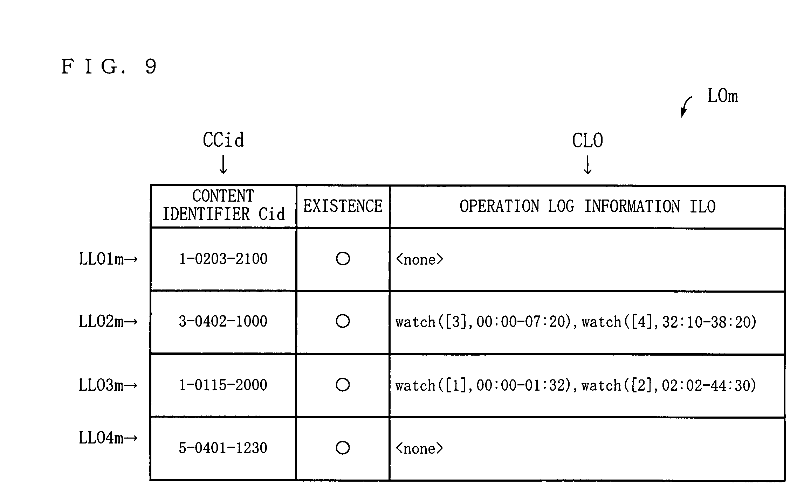

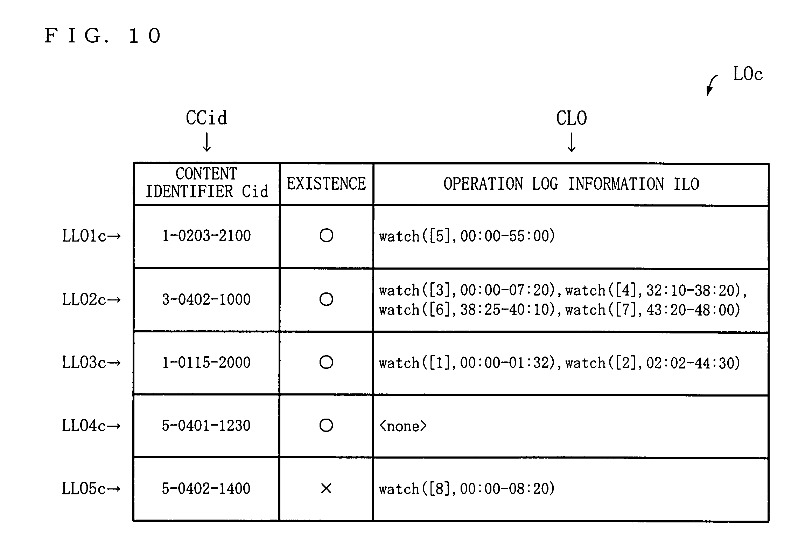

Before describing the specific operation of the operation log interpretation executor 122b, the merging of the operation log LOs and the operation log LOm in the present embodiment will be briefly described with reference to FIG. 8, FIG. 9, and FIG. 10. It should be noted that FIG. 8 and FIG. 9 show examples of the operation log LOs and the operation log LOm prior to the merging, respectively. Furthermore, FIG. 10 shows an example of an operation log LOc in which the operation log LOs and the operation log LOm are merged. It should be noted that, in the present embodiment, an existence column is added to each of the operation logLOs, operation log LOm and operation log LOc unlike the operation log LO in the above-described first embodiment. The item "existence" represents whether the entity of the content data Dc corresponding to the content identifier Cid in each row exists in the associated content presentation device (i.e., the slave content presentation device 110a and the master content presentation device 120a in the present example). In each existence column, "o" is indicative of true (i.e., the existence of the content data Dc), while "x" is indicative of false (i.e., the nonexistence of the content data Dc).

If the operation log LOs is compared with the operation log LOm, a content operation log row LLO1s, a content operation log row LL02s, and a content operation log row LLO3s have the content identifiers Cid common to a content operation log row LLO1m, a content operation log row LLO2m, and a content operation log row LLO3m, respectively. Consequently, a content operation log row LLO1c, a content operation log row LLO2c and a content operation log row LLO3c of the merged operation log LOc are a sum of the content operation log row LLO1s and the content operation log row LLO1m a sum of the content operation log row LLO2s and the content operation log row LLO2m, and a sum of the content operation log row LLO3s and the content operation log row LLO3m, respectively.

Further, the content data Dc whose content identifier Cid is "5-0402-1400" is included as a content operation log row LLO5s in the operation log LOs but is not included in the operation log LOm. Therefore, a content operation log row LLO4c is generated in the operation log LOc, whereas the value of "existence" is x (false) which remains unchanged from the value generated in Step S704.

Furthermore, the content data Dc whose content identifier Cid is "5-0401-1230" is included as a content operation log row LLO4s in the operation log LOm but is not included in the operation log LOs. Therefore, a content operation log row LLO4c is generated in the operation log LOc.

In Step S301, the operation log LOs generated in the slave content presentation device 110a is read into the master content presentation device 120a via a bridge medium BM. Then, the control proceeds to the next Step S702.

In Step S701, the content identifiers Cid included in the content identifier column CCids of the operation log LOs are each selected and assigned a variable c. Then, the control proceeds to the next Step S702.

In Step S702, it is determined if there is no content identifier Cid that should be selected as the variable c exists since all the content identifiers Cid included in the operation log LOs have already been selected as a result of the process in Step S701 described above. In the case of Yes, the control proceeds to Step S302 described above. On the other hand, in the case of No, the control proceeds to new Step S703.

In Step S703, it is determinedwhether or not the variable c is included in any of the columns for the content identifiers Cid in the content operation log row LLOm of the operation log LOm in the master content presentation device 120a. In the case of No, the control proceeds to Step S704. On the other hand, in the case of Yes, the control skips Step S704 to proceed to Step S705.

In Step S704, an operation list column CLOs in the operation log LOs concerning the variable c is additionally generated as an operation list column CLOm in the operation log LOm. As the values of the generated operation list column CLOm, the column for the content identifiers Cid is assigned the variable c, the item "existence" is assigned "x" (false), and the operation log information ILO is assigned <none> . Then, the control proceeds to the next Step S705.

In Step S705, the operation list column CLOm of the operation log LOm is merged with the operation list column CLOs concerning the variable c in the operation log LOs, thus generating the operation log LOc. It should be noted that the operation log LOs and the operation log LOm each consist of a set of a plurality of pieces of the operation information LO, and due to the merging, the operation log LOc is assigned a sum of the operation log LOs and the operation log LOm. It is to be noted that, in the item "existence", the values in the operation log LOm prior to the execution of Step S705 are still retained. Then, the control returns to Step S701 described above.

On the other hand, if it is determined that the answer is Yes, i.e., there is no content identifier Cid which should be assigned the variable c in Step S702 described above, the control goes through Step S302 and Step S303 describe above, and proceeds to Step S706.
In Step S706, a portion of the content data Dc, which is unproducible in the master content presentation device 120a, is removed from the operation log LOm. It should be noted that the item "existence" in the operation log information ILOc represents whether the entity of the content data Dc corresponding to the content identifier Cid in each row exists in the master content presentation device 120a. The content data Dc whose item "existence" is "x" (false) is determined to be unproducible and is removed. Then, the control proceeds to the next Step S305.

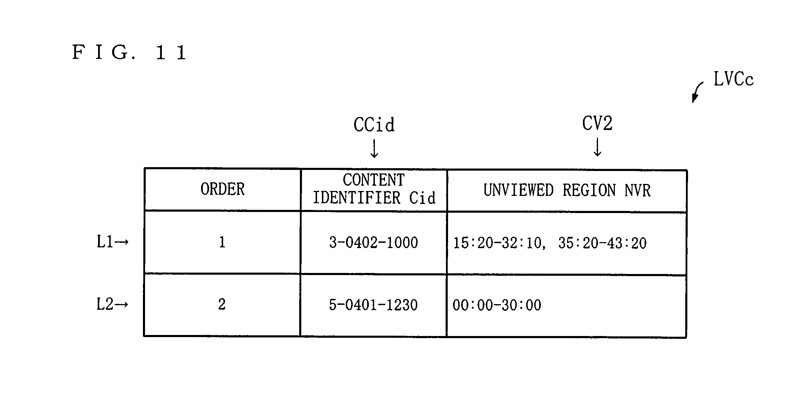

After going through Step S305 and Step S306, in Step S307, the viewing candidate list LVC is presented to the user. It should be noted that the viewing candidate list LVC in the present embodiment is identified as the viewing candidate list LVCc in the manner described above, and an example thereof is shown in FIG. 11.

As described in the foregoing, in the content presentation system according to the second embodiment, the respective operation logs LO (i.e., the operation log LOs and the operation log LOm in the present example) of a plurality of the content presentation devices(i.e.,the slave content presentation device 110a and the master content presentation device 120a in the present example) are merged and converted into one operation log LO (i.e., the operation log LOc in the present example). Hence, even if an arbitrary number of operations are alternately performed between a plurality of the content presentation devices (i.e., the slave content presentation device 110a and the master content presentation device 120a), the operation log can be appropriately changed. Consequently, even in the different content presentation device, a user can appropriately obtain the candidates for the content data Dc that should be viewed next. Furthermore, this can similarly be carried out even in a situation where a plurality of the slave content presentation devices 110a and/or a plurality of the master content presentation devices 120a exist, and the candidates for the content data Dc that should be viewed are obtained while appropriately changing the roles of the master content presentation device 120a and the slave content presentation device 110a.

In other words, even if a plurality of the content presentation devices are prepared and an arbitrary number of selections and operations of the respective content presentation devices are performed in an arbitrary order, the operation logs LO for the notable content data Dc are merged and can be thus summarized in the operation log LOc. Consequently, a user can obtain an operation feeling that the identical content data Dc is operated even in the different content presentation device.

### (Third Embodiment)

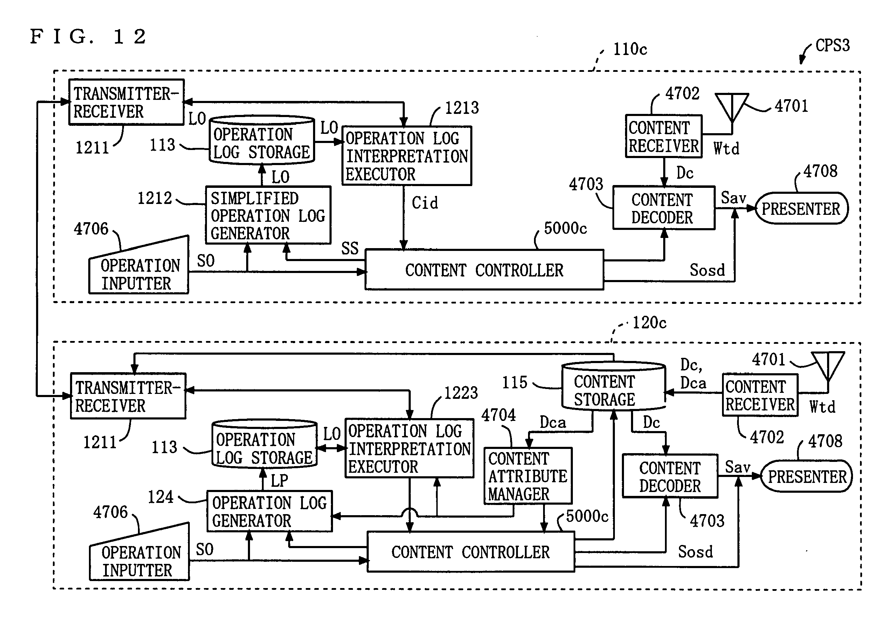

Hereinafter, a content presentation system according to a third embodiment of the present invention will be described with reference to FIG. 12, FIG. 13, FIG. 14, FIG. 15 and FIG. 17. Similarly to the content presentation system CPS1 and the content presentation system CPS2 described above, a content presentation system CPS3 according to the present embodiment also preferably includes a slave content presentation device and a master content presentation device. However, even if the slave content presentation device is a device having no content attribute data Dca such as an electric program guide (EPG), the present embodiment achieves a function of enabling the viewing with the similar operation feeling as in the first and the second embodiments.

Furthermore, even if a path through which the content data Dc is transmitted is provided between digital broadcasting and analog broadcasting, between broadcasting and streaming via communication, and between packaged media and streaming via communication, there is achieved the function of enabling a user to view the content data Dc with the similar operation feeling. For example, even if the slave content presentation device is a device for receiving analog broadcasting, the present embodiment is implementable. Specifically, the content presentation system CPS3 in the present embodiment needs no content attribute data manager, and handles a simplified operation log LP in which no content identifier Cid is used, instead of the operation log managed using the content identifier Cid as a key.

As shown in FIG. 12, the content presentation system CPS3 includes a slave content presentation device 110c and a master content presentation device 120c. The slave content presentation device 110c includes: an operation log storage 113; a simplified operation log generator 1212; an operation log interpretation executor 1213; an antenna 4701; a content receiver 4702; a content data decoder 4703; an operation inputter 4706; a content controller 4707; and a content controller 5000b.

That is, in the slave content presentation device 110c based on the slave content presentation device 110a shown in FIG. 1, the antenna 4701 and the content receiver 4702 of the master content presentation device 120a are added thereto while the content data attribute manager 4704 is removed therefrom. Furthermore, the operation log interpretation executor 112, the operation log generator 114 and the content controller 5000a are replaced with the operation log interpretation executor 1213, the simplified operation log generator 1212, and the content controller 5000c, respectively.

FIG. 49 shows an external appearance of a portable TV device implemented as the slave content presentation device 110c. As shown in this diagram, it can be seen from the external appearance of the portable TV device 110c that the antenna 4701 is added to the portable TV device exemplarily illustrated in FIG. 48. It should be noted that the other constituent elements of the slave content presentation device 110c shown in FIG. 12 are contained inside the portable TV device.

The master content presentation device 120c includes: an operation log storage 113; an operation log generator 124; a content storage 115; an antenna 4701; a content receiver 4702; a content data decoder 4703; a content data attribute manager 4704; an operation inputter 4706; and a content controller 4707. That is, in the master content presentation device 120c based on the master content presentation device 120a shown in FIG. 1, the bridge medium slot 111, the operation log interpretation executor 112 and the content controller 5000a are replaced with the transmitter-receiver 1211, the operation log interpretation executor 1223, and the content controller 5000c, respectively.

The transmitter-receivers 1211 are provided in common to the slave content presentation device 110c and the master content presentation device 120c, and are mutually connected so as to be used in exchanging the operation log LO (or the simplified operation log LP) between the slave content presentation device 110a and the master content presentation device 120a. It should be noted that the transmitter-receiver 1211 may be transmitter-receiver interface provided via wireless or wired communication medium such as a wireless LAN or a modem connected to a public line. Further, the transmitter-receiver 1211 may be the bridge medium slot 111, and in that case, a bridge medium BM is used in exchanging the operation log LO (or the simplified operation log LP).

In the slave content presentation device 110c, an operation performed on the operation inputter 4706 by a user, and the state of the content controller 5000c are inputted to the simplified operation log generator 1212. The simplified operation log generator 1212 generates the simplified operation log LP indicative of the user's operation performed on the operation inputter 4706, and adds/updates it as the simplified operation log LP stored in the operation log storage 113.

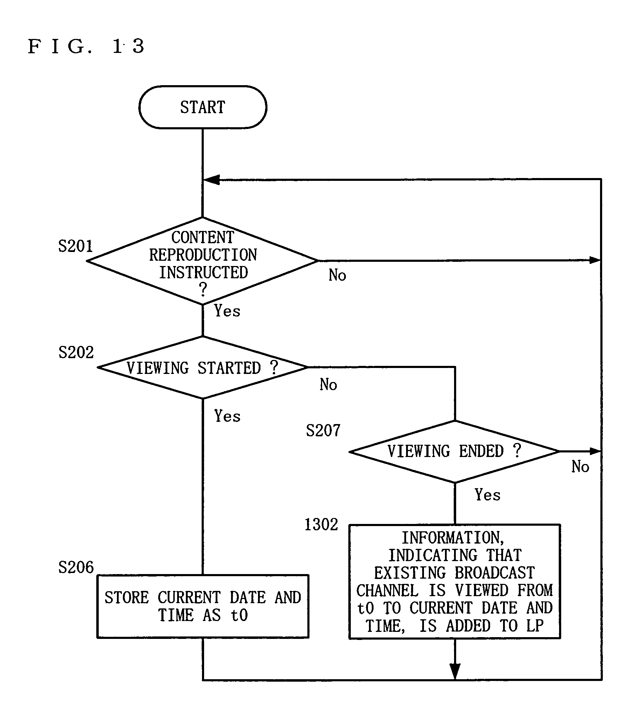

Next, referring to a flow chart shown in FIG. 13, the generation of the simplified operation log LP by the simplified operation log generator 1212 will be described. In the flow chart shown in FIG. 13 based on the flow chart shown in FIG. 3, Steps S203, S204, S205 and S209 are removed therefrom, and Step S208 is replaced with Step S1302. Hence, the description of the points, which have already been described with reference to FIG. 2, will be omitted.

After having going through Step S201 described above, if the viewing start has been determined in Step S202 , the current date and time are stored as a variable to in Step S206. On the other hand, if the viewing start has not been determined in Step S202, upon determination of the viewing end in Step S207, information indicative of the fact that "the current broadcast channel has been viewed from t0 to the current date and time" is added to the simplified operation log LP in Step S1302. Step S1302 is carried out at the timing when the operation of ending the viewing has been performed, and therefore, the current date and time are the date and time when the viewing has ended. Accordingly, the simplified operation log LP having the information on the broadcast channel, which has been viewed just before, and on the time zone during which this broadcast channel has been viewed, is stored in the operation log storage 113.

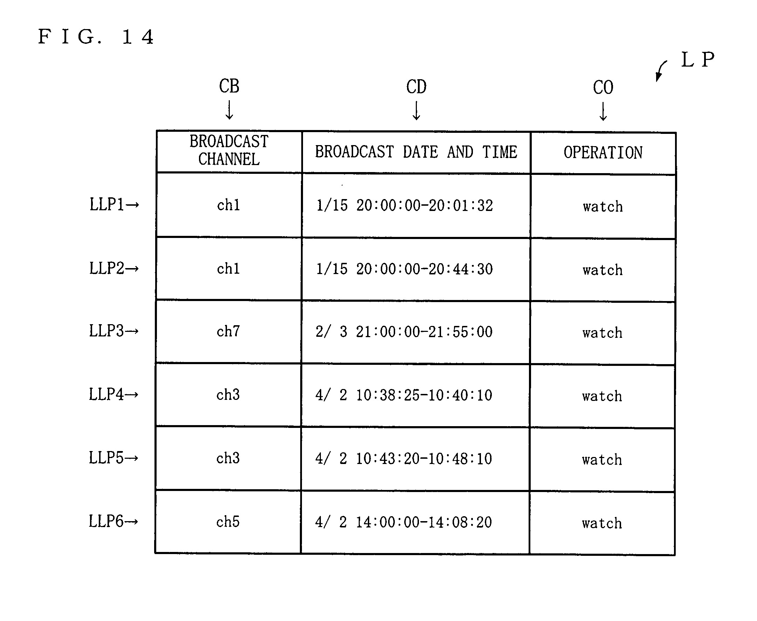

FIG. 14 shows an example of the simplified operation log LP generated in the present embodiment. As shown in this diagram, the simplified operation log LP has a data structure in tabular form including a broadcast channel column CB, a date and time column CD, an operation column CO, and simplified content operation log rows LLP. It should be noted that, in this diagram, the simplified content operation log rows LLP1 through LLP6 are exemplarily illustrated. The simplified operation log generator 1212 adds, for each simplified content operation log row LLP, data to the simplified operation log LP stored in the operation log storage 113 every time the viewing is started or ended.

Further, a row is added every time the broadcast channel being viewed is changed since the viewing concerning the broadcast channel before its change is ended and the viewing concerning the broadcast channel after its change is subsequently started. At this time, in the operation column, the value "watch" indicative of the viewing is written in Step S1302.

The operation log interpretation executor 1213 is connected to the transmitter-receiver 1211 and the operation log storage 113. The operation log interpretation executor 1213 functions to send, via the transmitter-receiver 1211 thereof, the simplified operation log LP, which is stored in the operation log storage 113, to the transmitter-receiver 1211 of the master content presentation device 120c.

In the master content presentation device 120c, based on the simplified operation log LP sent from the slave content presentation device 110c and inputted via the transmitter-receivers 1211, the operation log interpretation executor 1223 generates the candidates for the content data Dc to be reproduced in the master content presentation device 120c.

The process for generating the candidates for the content data Dc to be reproduced in the master content presentation device 120c is broadly divided into: a first process of converting the simplified operation log LP, inputted from the slave content presentation device 110c, to a normal operation log LO; and a second process of generating, based on the converted operation log LO, the candidates for the content data Dc to be reproduced. As for the second process, Step S301 of the flow chart shown in FIG. 4 may be performed so as to read a result of the first process, instead of reading the operation log LOs generated in the slave content presentation device 110a from the bridge medium BM. Hence, the description of the second process will be omitted.

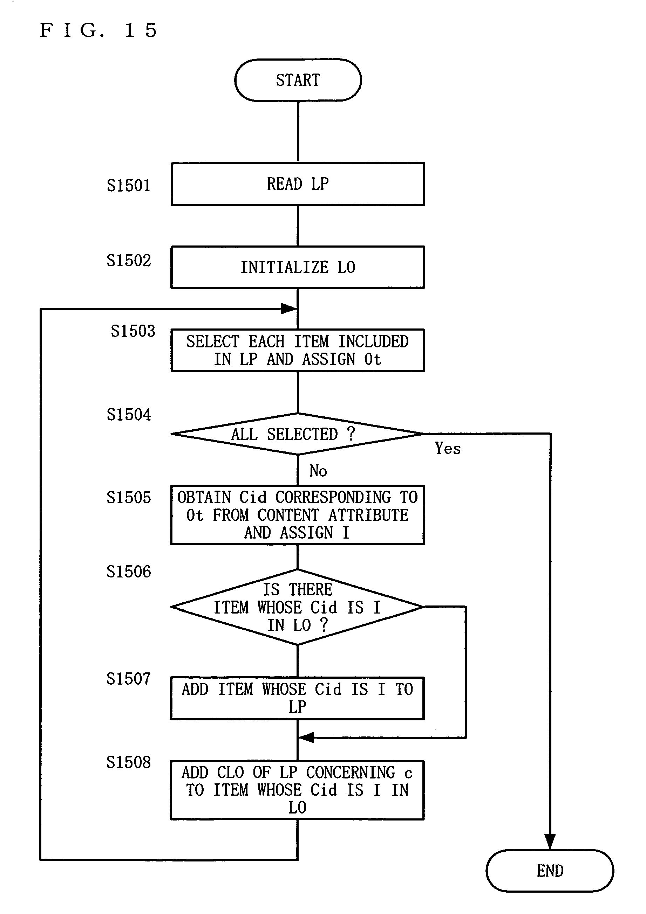

Referring to a flow chart shown in FIG. 15, the first process of generating the operation log LO based on the simplified operation log LP will be described.
In Step S1501, the operation log interpretation executor 1223 reads the simplified operation log LP from the slave content presentation device 110c via the transmitter-receivers 1211. Then, the control proceeds to the next Step S1502.

In Step S1502, the operation log interpretation executor 1223 initializes the operation log LO stored in the operation log storage 113. Due to the initializing process, the operation log LO becomes an operation log having no row. Then, the control proceeds to the next Step S1503.

In Step S1503, the operation log interpretation executor 1223 selects each item included in the simplified operation log LP and assigns a variable ot thereto. Then, the control proceeds to the next Step S1504.

In Step S1504, it is determined whether or not all the items included in the simplified operation log LP have already been selected as the variables ot. In the case of Yes, i.e., if all the items have already been selected, this first process is brought to an end. On the other hand, in the case of No, i.e., if it is determined that the item, which should be selected as the variable ot, still remains in the simplified operation log LP, the control proceeds to the next Step S1505.

In Step S1505, the operation log interpretation executor 1223 makes reference to the content data attribute manager 4704 to obtain the content identifier Cid corresponding to the variable ot from the content attribute data Dca, and assigns a variable I thereto. Then, the control proceeds to the next Step S1506.

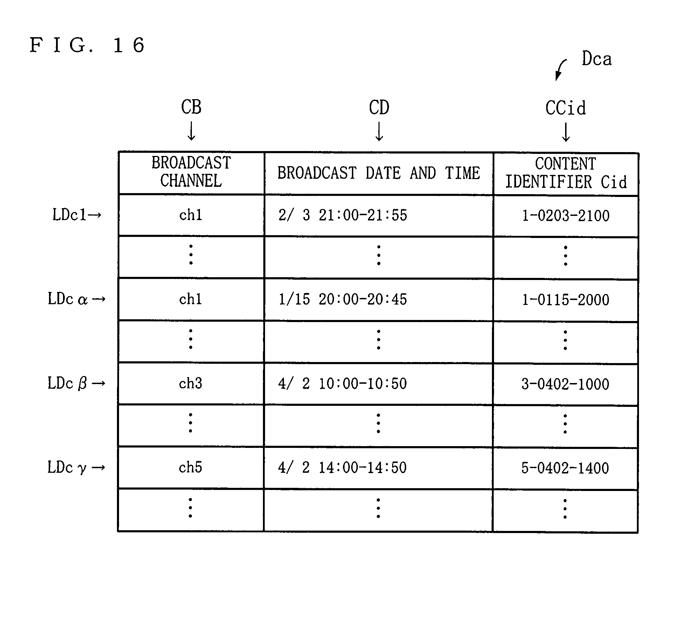

Referring to FIG. 16, the process of obtaining the content identifier Cid in Step S1505 will be described. FIG. 16 shows an example of the content attribute data Dca retained in the content data attribute manager 4704 of the master content presentation device 120c. The content attribute data Dca has a data structure in tabular form including a broadcast channel column 1CB, a broadcast date and time column CD, a content identifier column CCid, and content attribute rows LDc. In this diagram, there are shown specific values in the content attribute rows LDcl, LDca, LDcB and LDcy (a, B and y are arbitrary natural numbers where 1 < a < B < y). As the values for the content identifiers Cid, values, determined uniquely based on the broadcast channel and the broadcast starting date and time, are used.

As the content attribute data Dca, information in an electric program guide for digital broadcasting may be used. In this case, the content attribute data Dca may have a character string indicative of the name of the content data Dc in addition to the columns exemplarily illustrated in FIG. 16. It should be noted that an identifier, such as "event_id" utilized to identify a program, for example, in BS digital broadcasting in Japan, may be used as the content identifier Cid.

The process of obtaining the content identifier Cid associated with the content operation log rowLLP1 of the simplified operation log LP shown in FIG. 14 will be described. The operation log interpretation executor 1223 searches among the content attribute rows LDc of the content attribute data Dca (FIG. 16) for one including the broadcast channel and the broadcast date and time written in the simplified content operation log row LLP1. As a result of the search, the content attribute row LDca of the content attribute data Dca is obtained. Then, the value of the content identifier Cid "1-0115-2000", which is the content identifier Cid of the content identifier column CCid in the obtained content attribute row LDca, is read. As a consequence, it is understood that the content identifier Cid associated with the simplified content operation log row LLP1 of the simplified operation log LP is read "1-0115-2000" and corresponds to the variable I.

Referring again to FIG. 15, in Step S1506, it is determined whether or not the item whose content identifier Cid is I already exists in the normal operation log LO. If such an item does not exist, the answer is determined to be No, and the control proceeds to Step S1507. On the other hand, if such an item exists, the answer is determined to be Yes, and the control skips Step S1507 to proceed to Step S1507.

In Step S1507, a row whose content identifier Cid is I is added to the normal operation log LO. Then, the control proceeds to the next Step S1508.

In Step S1508, the operation log information ILO of the simplified operation log LP concerning the variable c is added to the row whose content identifier Cid is I in the normal operation log LO. Then, the control proceeds to Step S1503.

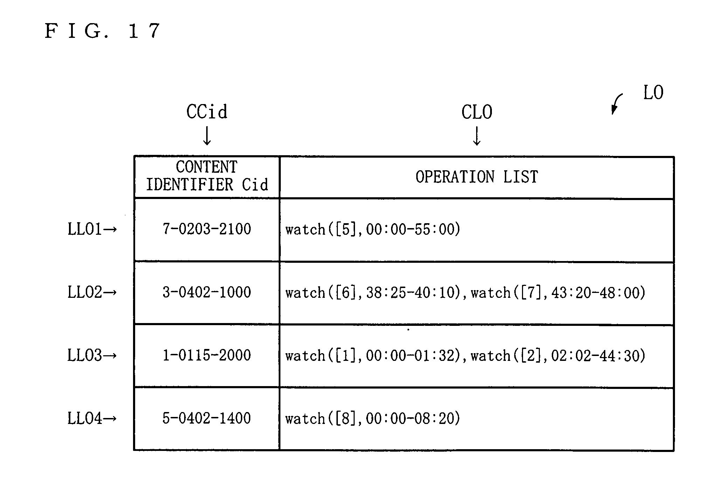

Referring to FIG. 17, the content operation log rows LLO obtained in Step S1508 mentioned above will be described. FIG. 17 shows an example of the normal operation log LO generated by the conversion performed in the third embodiment. For the simplified content operation log row LLP1 of the simplified operation log LP, the content operation log row LL01 of the normal operation log LO is generated. For simplification of the description, in the above-described example, a single content attribute row LDc is searched in the content attribute data Dca; however, if a plurality of the content attribute rows LDc are obtained as the search results, the simplified operation log LP is divided with respect to the time axis for each content attribute row LDc of the content attribute data Dca as a search result, thus making it possible to appropriately generate the operation log LO even in the case where a plurality of pieces of the content data Dc (programs) are continuously viewed on the same broadcast channel.

### (Fourth Embodiment)

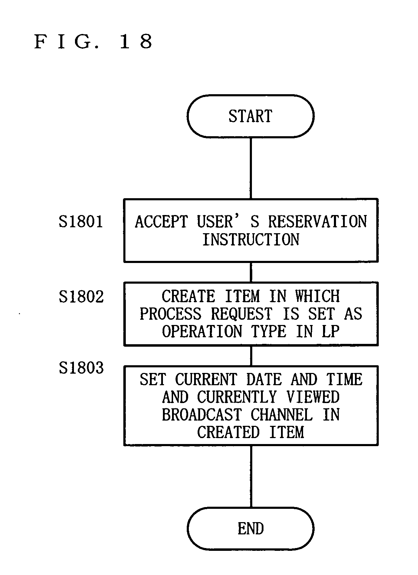

Hereinafter, a content presentation system according to a fourth embodiment of the present invention will be described with reference to FIG. 18, FIG. 19, FIG. 20 and FIG. 21. A content presentation system CPS4 according to the present embodiment functions to perform a reservation for viewing and/or acquisition of content data using a master content presentation device, by allowing a user to carry out a reserving operation while viewing using a slave content presentation device. For example, a reserving operation is performed during the viewing of an on-air program in the slave content presentation device, thereby allowing the reservation, i.e., viewing and/or recording, of the content data Dc, for which the reserving operation has been performed, to be executed in the master content presentation device.

The content presentation system CPS4 is basically configured similarly to the above-described content presentation system CPS3. The simplified operation log generator 1212 of the slave content presentation device 110c, and the operation log interpretation executor 1223 of the master content presentation device 120c are operated slightly differently. From this standpoint, the slave content presentation device and the simplified operation log generator 1212 in the content presentation system CPS4 will be called a "slave content presentation device 110d" and a "simplified operation log generator 1212d", respectively. Similarly, the master content presentation device and the operation log interpretation executor 1223 in the content presentation system CPS4 will be called a "master content presentation device 120d" and an "operation log interpretation executor 1223d", respectively. Furthermore, the content controller will also be called a "content controller 5000a" . Hence, the description of the points common to the foregoing content presentation system CPS3 will be omitted, and the following description will be focused on the simplified operation log generator 1212d and the operation log interpretation executor 1223d which are unique to the content presentation system CPS4.

Referring to FIG. 18, the process for adding a "reserve" operation request to the simplified operation log LP by the slave content presentation device 110d will be described below.
In Step S1801, a user operates the operation inputter 4706 of the slave content presentation device 110d, thereby instructing a reservation for the content data Dc currently viewed by the user using the slave content presentation device 110d. In this embodiment, an operation called "reservation" means nothing other than to "reserve" , in the slave content presentation device 110d, some sort of a function of the master content presentation device 120d, which is to be performed on the content data Dc watched (currently viewed) by the slave content presentation device 110d.

For example, the specific functions instructed by a "reservation" from the user include: to automatically start the viewing of the identical content data Dc in the master content presentation device 120d; to permanently store the content data Dc already recorded in the master content presentation device 120d; to reserve the recording of the next program (content data Dc) by the master content presentation device 120d if the content data Dc is a drama series; and to make a reservation so as to acquire the content data Dc utilizing a communication line in the master content presentation device 120d or so as to acquire the content data Dc in some other means such as purchase of package media.

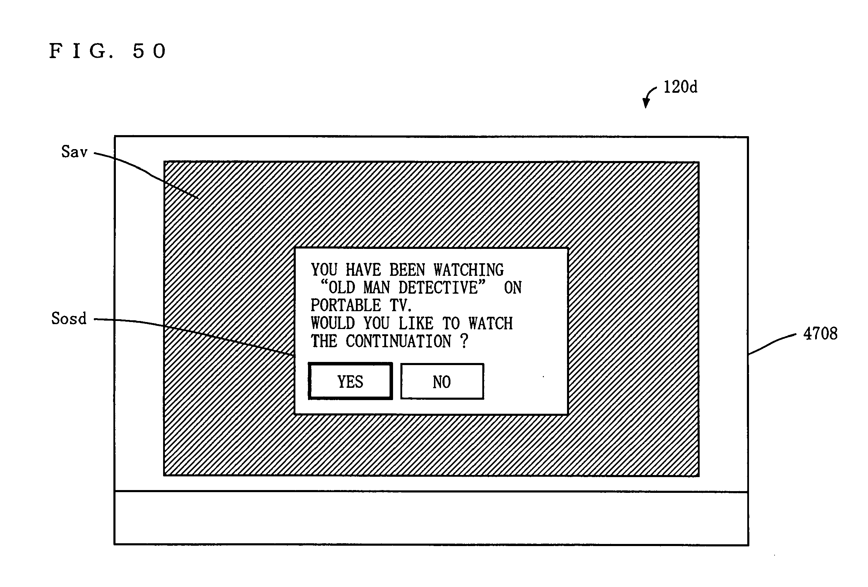

FIG. 50 shows an example of a message displayed on the presenter 4708 of a stationary TV device implemented as the master content presentation device 120d. In this diagram, on a display surface of a display serving as the presenter 4708, a shaded portion represents an image reproduced and displayed based on an audio/video signal Sav, while the inside of a center portion shows a message generated and displayed based on an OSD signal Sosd. In this case, this message (Sosd) is asking the user whether the viewing of a program, which has been interrupted in the portable TV device serving as the slave content presentation device 110d, is to be restarted from the interrupted portion in the stationary TV device serving as the master content presentation device 120d.

As for which of those functions is to be selected, the user directly selects from among functional options presented on the presenter 4708 by operating the operation inputter 4706. Alternatively, the options may be narrowed down to an appropriate one by obtaining the current state of the slave content presentation device 110d from the content controller 5000d. Thus, after having made the "reservation" in Step S1801, the control proceeds to the next Step S1802.

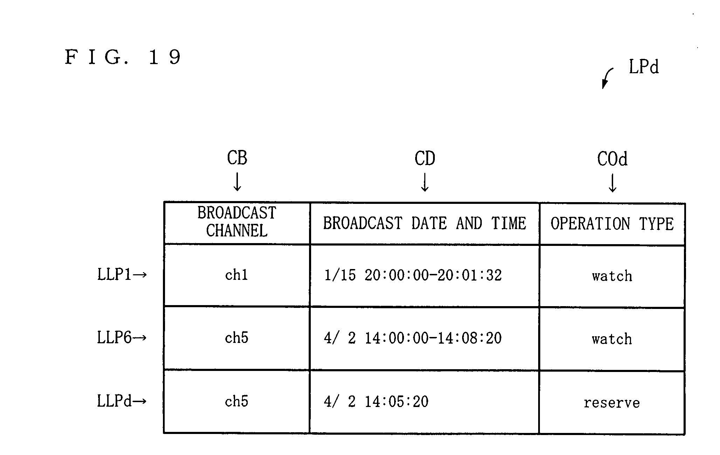

In Step S1802, the simplified operation log generator 1212 creates a simplified content operation log row LLPd in which a process request ("reserve") is set as the operation type in the simplified operation log LP. FIG. 19 shows an example of the simplified operation log LP in the present embodiment. In the simplified operation log LPd generated in the present step, the operation column CO in the simplified operation log LP generated in the third embodiment shown in FIG. 14 is replaced with an operation type column COd. Further, in the operation type column COd, the value "watch" indicative of viewing is stored similarly to the operation column CO, and in addition, the value "reserve" indicative of the reservation request process is further stored. Although the value "reserve" with no argument is stored as the operation type for the sake of simplification, the type of an operation to be reserved, for example, may be stored as an argument in the operation type column in a superposed manner, or a separate column may additionally be prepared so that an argument is stored. Then, the control proceeds to the next Step S1803.

In Step S1803, "broadcast channel" and "broadcast date and time" for the simplified content operation log row LLPd generated in Step S1802 are set. In the "broadcast date and time" column in the simplified content operation log row LLPd, a value indicative of a certain time point but having no temporal length unlike the other simplified content operation log rows LLP, i.e. , "4/2 14: 05: 20", is stored in the present example. "4/2 14: 05: 20" represents 14 hr 5 min 2 sec on Apr. 2. It should be noted that information indicative of a temporal length may be stored as required. Then, the present process is brought to an end.

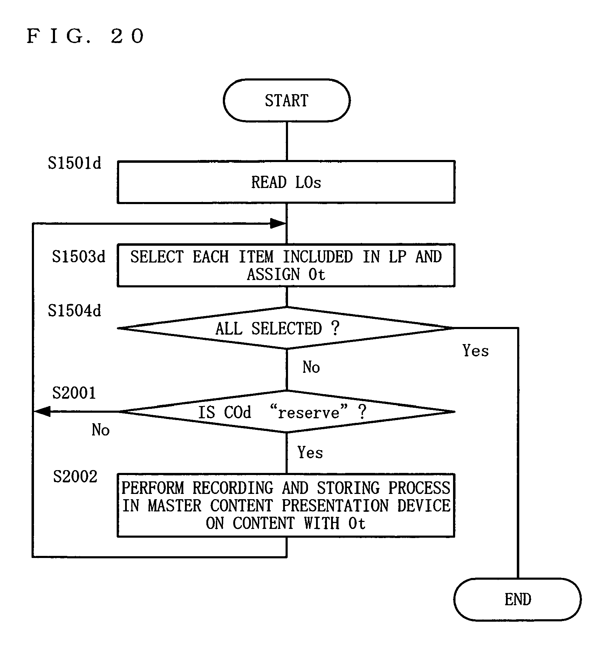

Next, referring to a flow chart shown in FIG. 20, the description will be made about a reservation process in the master content presentation device 120d executed in accordance with a reservation made in the slave content presentation device 110d. In other words, the description will be made about the execution of a "reserve" operation request in the operation type column COd in the simplified content operation log row LLPd of the simplified operation log LPd. In the present flow chart, except the points intended for the simplified operation log LPd, Steps S1501d, S150d3 and S1504d are similar to Steps S1501, S1503 and S1504 intended for the simplified operation log LP in the flow chart shown in FIG. 15. Therefore, the description thereof will be omitted.

In Step S2001, it is determined whether or not the operation type "ot", which is the item selected out of the simplified operation log LPp in Step S1503d, is "reserve". In the case of Yes, the control proceeds to the next Step S2002, and in the case of No, the control returns to Step S1503d.

In Step S Step S2002, a recording and storing process in the master content presentation device 120d is performed on the content data Dc with "ot". In Step S2002, as described in regard to Step S1505d of FIG. 15 in the third embodiment, the content identifier Cid is obtained from the content attribute data Dca stored in the content data attribute manager 4704.

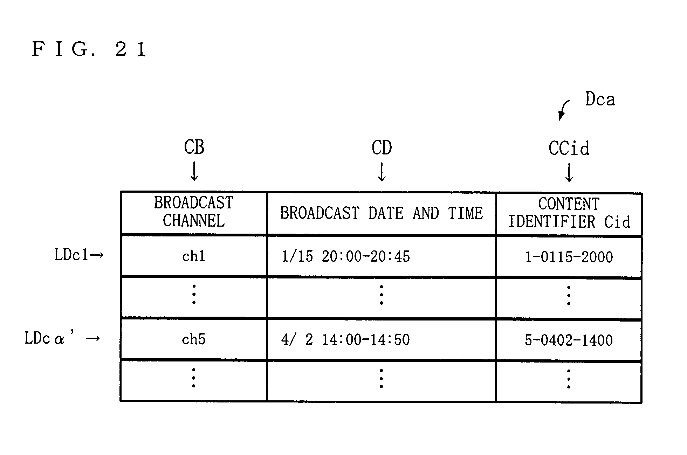

FIG. 21 shows an example of the content attribute data Dca retained in the master content presentation device 120d. For the simplified content operation log row LLPd of the simplified operation log LP shown in FIG. 19, a content attribute row LDca' of the content attribute data Dca having (containing) the corresponding broadcast date and time and the corresponding broadcast channel is selected, and the value of the content identifier Cid "5-OLo2-1400" is obtained from the content identifier column CCid.

### (Fifth Embodiment)

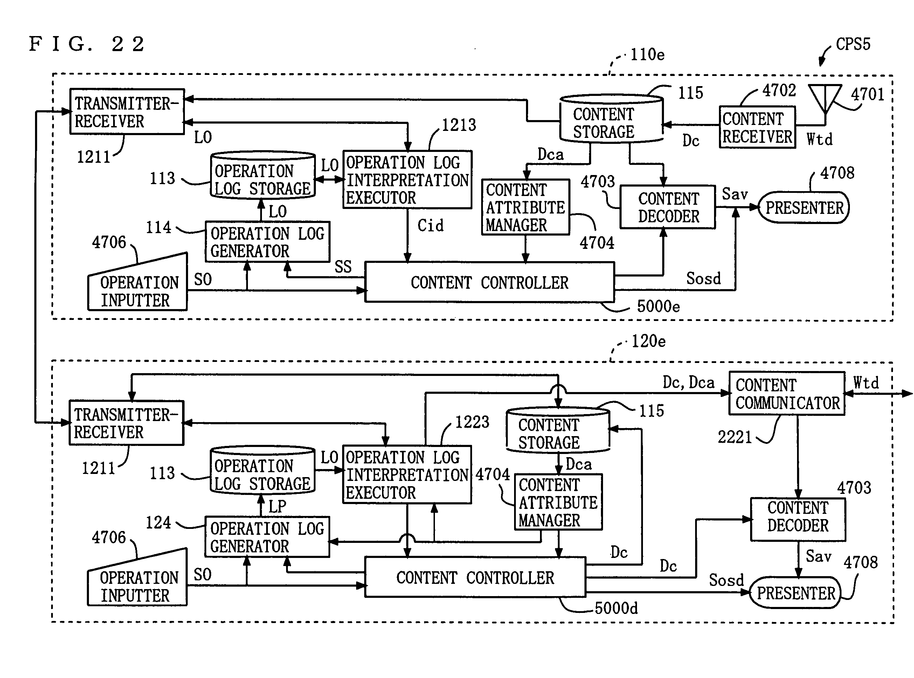

Hereinafter, a content presentation system according to a fifth embodiment of the present invention will be described with reference to FIG. 22, FIG. 23 and FIG. 24. A content presentation system CPS5 according to the present embodiment allows a user to perform a reserving operation during the reproduction of the content data Dc obtained sequentially via communication or broadcasting by a slave content presentation device, thus enabling a master content presentation device to perform reservation-recording of the content data Dc sequentially for broadcasting or communication.

As shown in FIG. 22, the content presentation system CPS5 includes a slave content presentation device 110e and a master content presentation device 120e. The slave content presentation device 110e is provided by adding a content storage 115 and a content data attribute manager 4704 to the slave content presentation device 110c of the content presentation system CPS3 according to the third embodiment shown in FIG. 12. Further, the content controller 5000c is replaced with the content controller 5000e.

Furthermore, in the master content presentation device 120e based on the master content presentation device 120c, the antenna 4701 and the content receiver 4702 are replaced with a content data communicator 2221. The output from the content storage 115 to the content data decoder 4703 is invalidated, and the output from the content controller 5000d to the operation log interpretation executor 1223 is newly provided. Moreover, the content controller 5000c is replaced with the content controller 5000d.

It should be noted that the content data communicator 2221 transmits and receives the content data Dc via an external communication line (not shown). The content data communicator 2221 maybe implemented by: a modem in information equipment capable of providing Internet communication; and a communication protocol stack such as TCP/IP.

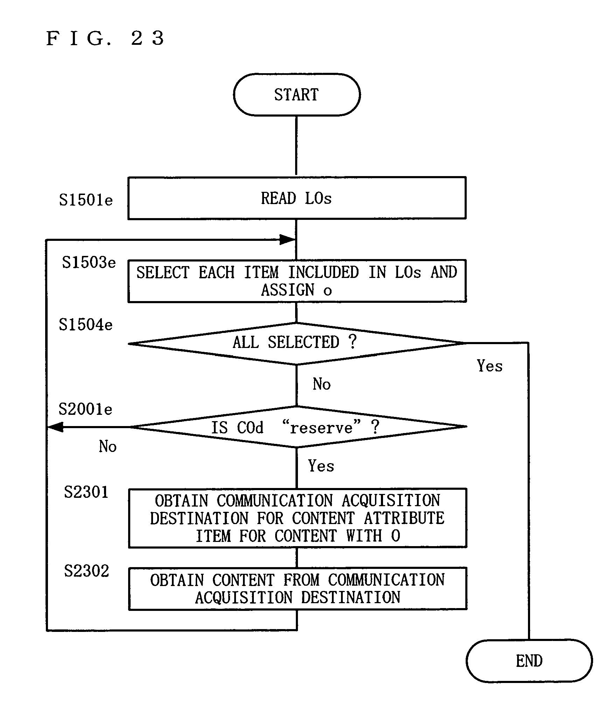

Next, referring to a flow chart shown in FIG. 23, the description will be made about a process for executing a "reserve" operation request in an operation log by the operation log interpretation executor 1223e in the master content presentation device 120e. In the flow chart shown in FIG. 23 based on the flow chart shown in FIG. 20, Steps S1501d, 1503d, 1504d, S2001 and S2002 are replaced with Steps S1501e, 1503e, 1504e, S2001e and S2301, respectively, and Step S2302 is newly added. It should be noted that Steps S1501e, 1503e, 1504e and S2001e are similar to Steps S1501d, 1503d, 1504d and S2001, respectively, except that the process is intended not for the simplified operation log LPd but for the operation log LOs, and therefore, the description thereof will be omitted.

If "reserve" is stored in the operation type column COd, in Step S2301, a destination for acquiring communication of the content data Dc is acquired by the operation log interpretation executor 1223e. Specifically, the operation log interpretation executor 1223e acquires, from the content data attribute manager 4704, the content attribute data Dca for the content data Dc selected in Step S1503e, thereby obtaining the communication acquisition destination from the acquired content attribute data Dca.

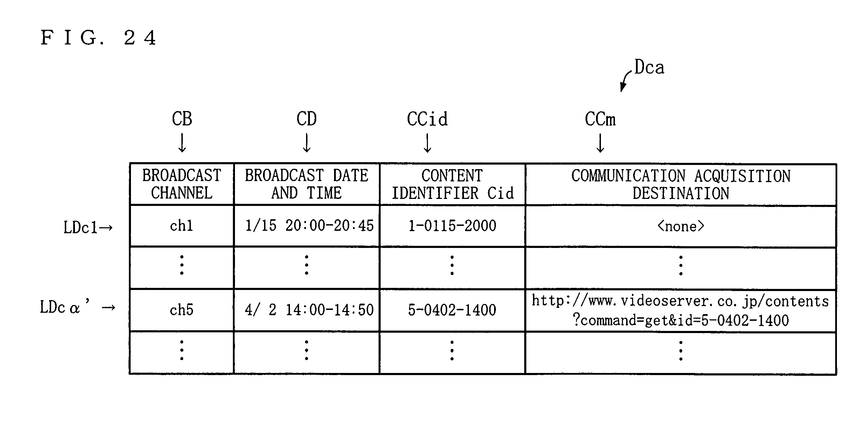

FIG. 24 shows an example of the content attribute data Dca retained in the content data attribute manager 4704 in the present embodiment. In addition to the date and time column CD, the date and time column CD and the content identifier column CCid of the content attribute data Dca shown in FIG. 21, a communication acquisition destination column CCm is added to the content attribute data Dca. In the communication acquisition destination column 2440, a character string such as URI (Uniform Resource Identifiers) may be stored. Then, the control proceeds to the next Step S2302.

In Step S2302, the content data Dc, which is designated by the communication acquisition destination obtained in Step 52301, is received by the content data communicator 2221. At this time, if the received content data Dc is instantaneously reproducible, it may be instantaneously reproduced as streaming data in synchronization with the reception thereof by the content data decoder 4703 without being temporarily buffered in the content storage 115 or the like.

### (Sixth Embodiment)

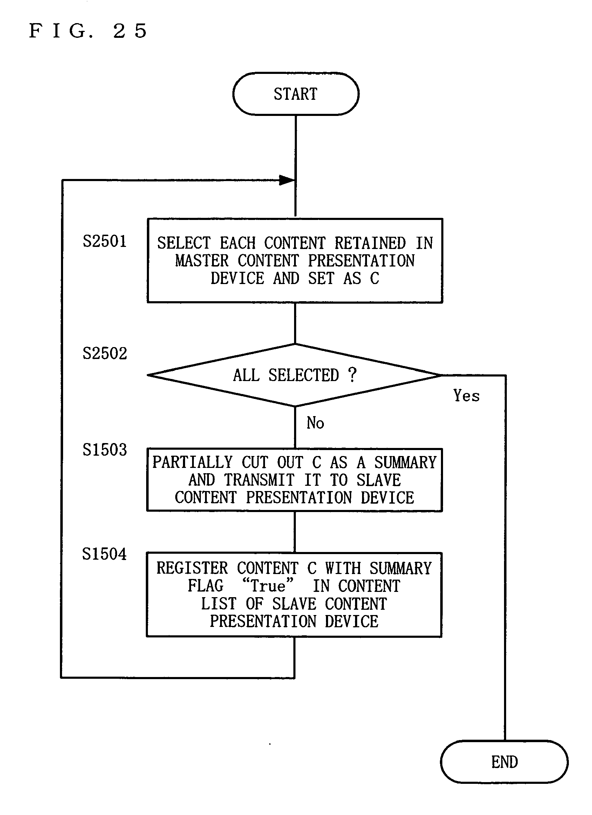

Hereinafter, a content presentation system according to a sixth embodiment of the present invention will be described with reference to FIG. 25, FIG. 26, FIG. 27, FIG. 28 and FIG. 29. A content presentation system CPS6 according to the present embodiment functions to perform a reservation such as viewing and/or acquisition of content data Dc in a master content presentation device 120 by allowing a user to perform a reserving operation during the viewing of a summary of the content data Dc in a slave content presentation device 110. For example, the slave content presentation device 110 is a content data Dc viewer using a memory card, and the master content presentation device 120 functions to receive the content data Dc and to write the content data Dc and a summary of the content data Dc into the memory card. Further, a reserving operation is performed while the summary of the content data Dc in the memory card is being viewed by the slave content presentation device 110, thereby enabling an instruction for reservation-recording of the content data Dc and/or writing of the content data Dc into the memory card by the master content presentation device 120.

The content presentation system CPS6 includes the slave content presentation device 110a and the master content presentation device 120a basically similarly to the above-described content presentation system CPS1. However, the system in the present embodiment has a function of creating a summary list, which the content presentation system CPS1 does not have. Therefore, in the content presentation system CPS6, the slave content presentation device 110a and the master content presentation device 120a are identified as the slave content presentation device 110f and the master content presentation device 120f, respectively.

Referring to a flow chart shown in FIG. 25, the description will be made about the generation of the summarized content data Dc at the master content presentation device 120f and a process for storing the summarized content data Dc in the slave content presentation device 110f.

In Step S2501, the content data Dc retained in the master content presentation device 120f are each selected and set as a variable C. Then, the control proceeds to the next Step 52502.

In Step S2502, it is determined whether or not all the content data Dc have already been selected and there is no content data Dc to be selected. In the case of Yes, the process is brought to an end, and in the case of No, the control proceeds to Step S2503.

In Step S2503, the variable C (content data Dc) set in Step S2501 is partially cut out as a summary. Then, a part of the variable C, which has been cut out, is transmitted to the slave content presentation device 110a. For example, an excerpt consisting only of a portion of the content data Dc for a certain period of time at the starting point thereof may be transmitted as the cut-out summary of the content data Dc (C). Then, the control proceeds to the next Step S2404.

In Step S2504, the content data DcC with a summary flag set to "True" is registered in a content data list CDL of the slave content presentation device 110f.

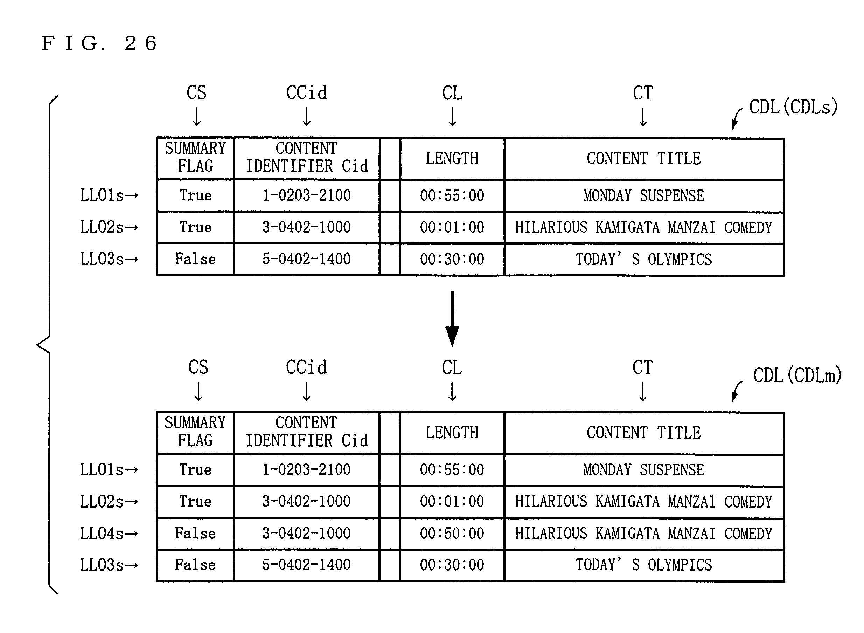

FIG. 26 shows an example of a content data length column CLd in the sixth embodiment. It should be noted that, in the upper part, an example of the content data list CDL of the slave content presentation device 110f is shown. In the lower part, the content data list CDL processed in the master content presentation device 120f is shown. It should be noted that, where necessary, the content data list CDL generated at the slave content presentation device 110f will be identified as a content data list CDLs, and the content data list CDL generated at the master content presentation device 120f will be identified as a content data list CDLm.

The content data list CDL is a database having a structure in tabular form in which each row is associated with the content data Dc stored in the slave content presentation device 110f, and includes: a content identifier column CCid in which the content identifiers Cid are stored; a content data length column CL in which the lengths of the content data Dc are stored; a content title column CT in which content data titles, each consisting of a character string when the content data Dc is displayed to a user, are stored; and a summary column CS in which summary flags are stored.

If there is "True" in the summary column CS, it is represented that the content data Dc, specified by the content identifier Cid in the notable row, is stored as a summary in the slave content presentation device 110f. The content data list CDL is exchanged between the master content presentation device 120f and the slave content presentation device 110f by inserting one bridge medium BM into the respective bridge medium BM slots thereof. Therefore, the operation performed in Step S2504 may actually be the operation performed on the content data list CDL stored in the bridge medium BM inserted into the master content presentation device 120f. It should be noted that, in the case where the master content presentation device 120f and the slave content presentation device 110f are directly connected via communication, the content data list CDL stored in the slave content presentation device 110f may be operated directly from the master content presentation device 120f.

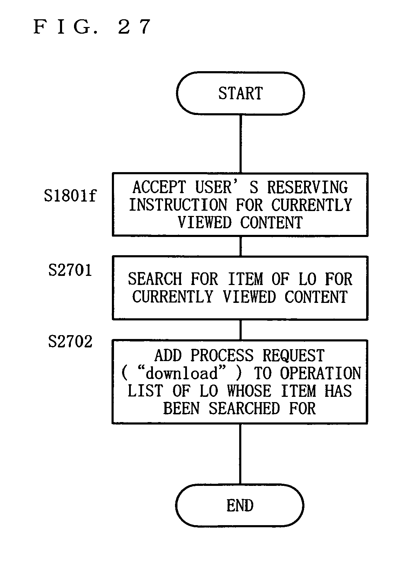

Referring to a flow chart shown in FIG. 27, the description will be made about a process for a user to add a transfer request for the whole content data Dc to the operation log LOs in the slave content presentation device 110f. The user is able to view the content data Dc, which is registered in the slave content presentation device 110f and displayed in the content data list CDL generated by the process described with reference to the flow chart shown in FIG. 25. By following the process described below, while viewing the summary of the content data Dc, the user can send a request for transferring the whole content data Dc being viewed from the master content presentation device 120f to the slave content presentation device 110f.

First, in Step S1801f, the user instructs a reservation-recording of the content data Dc being viewed in the slave content presentation device 110f. Then, the control proceeds to the next Step S2701.

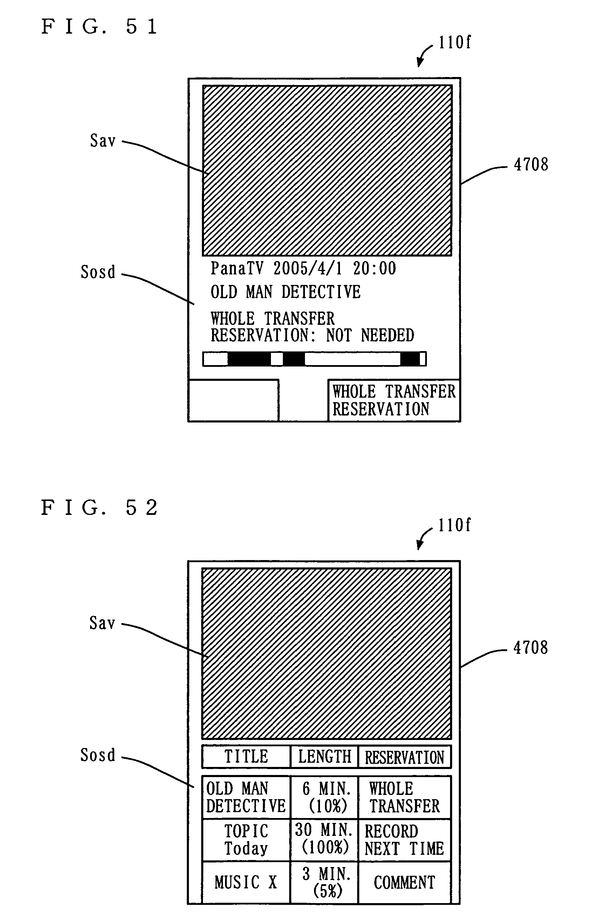

FIG. 51 shows a state of a display surface of a display serving as the presenter 4708 in a portable TV device implemented as the slave content presentation device 110f. In this diagram, a shaded portion represents an image reproduced and displayed based on an audio/video signal Sav, while a portion located therebelow shows a reservation-recording message generated and displayed based on an OSD signal Sosd.

In Step S2701, the operation log generator 112 of the slave content presentation device 110f searches the operation log LOs, stored in the operation log storage 113, for the content operation log row LLO associated with the currently viewed content data Dc. Then, the control proceeds to the next Step S2702.

In Step S2702, a process request ("download") is added to the operation log information ILO of the content operation log row LLO that has been searched for in Step S2701. Then, the control is brought to an end.

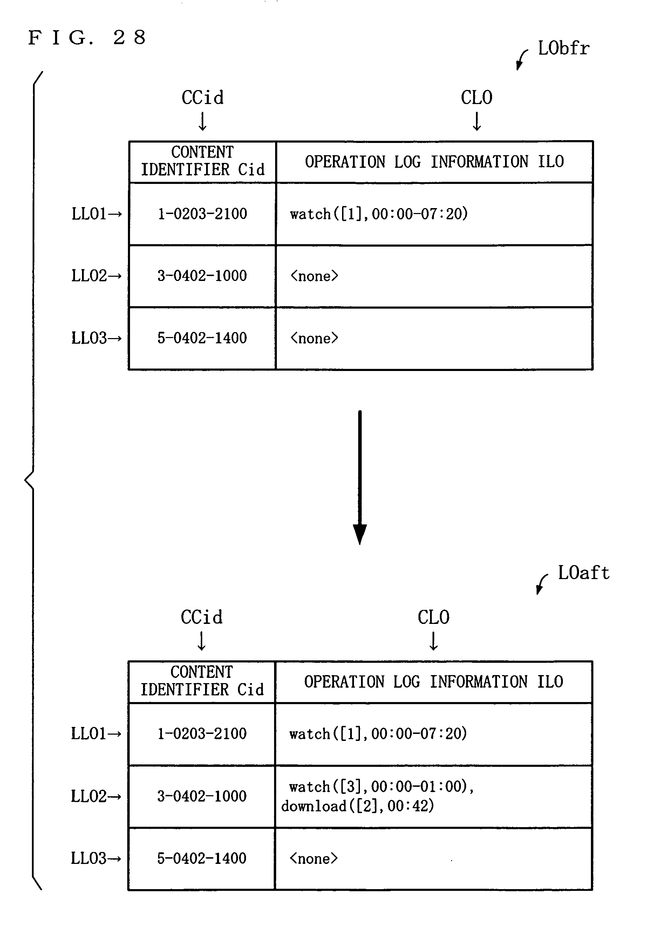

FIG. 28 shows an example of the operation log LO in the slave content presentation device 110a. In this diagram, the reference characters "LObfr" and "LOaft" denote the operation logs LO before and after the transfer of the whole content data Dc is requested as described above, respectively. If the user views the content data Dc whose content identifier Cid is "3-0402-1000" in the content operation log row LLO2 of the operation log LObfr, and requests the whole transfer when the content data Dc has been reproduced for 42 seconds from the starting point thereof, the data "download ([2], 00: 42)", indicating that the whole transfer has been requested when the content data Dc has been reproduced for 42 seconds from the starting point thereof, is added as the operation log information ILO to the content operation log row LLO2 of the operation log LOaft.

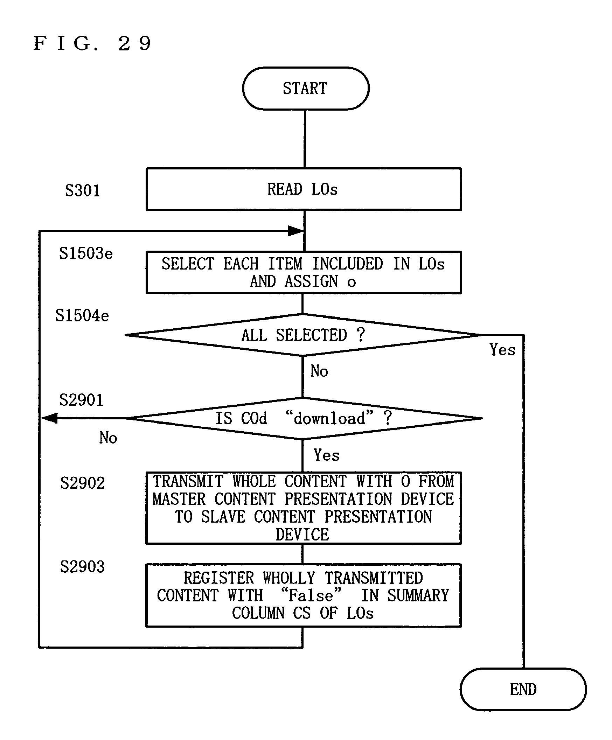

Next, referring to FIG. 29, the description will be made about a process for the master content presentation device 120f to transfer the whole of the content data Dc, for which the whole transfer has been requested at the slave content presentation device 110f.
First, the operation log LOs is read from a bridge medium BM (Step S301). Next, items included in the operation log LOs are each selected and assigned a variable o (Step S1503e, S1504e).

Then, in Step S2901, it is determined whether the process request ("download") exists in the operation type column COd of the item o selected in Step S1503e from the operation log LOs of the slave content presentation device 110f. In the case of Yes, the control proceeds to the next Step S2902, and in the case of No, the control returns to Step S1503e.

In Step S2902, a process for sending the whole of the content data Dc associated with the item o from the master content presentation device 120f to the slave content presentation device 110f is executed. Then, the control proceeds to the next Step S2903.

In Step S2903, the wholly transferred content data Dc is registered with a summary flag "False" in the content data list CDL of the slave content presentation device 110f. By setting the summary flag in the summary column CS to "False" , it becomes possible to represent the whole content data Dc. At this time, as indicated in the content data list CDLs shown in the lower part of FIG. 26, the information, indicating that the whole of the content data Dc whose content identifier Cid is "3-OLo2-1000" is registered in the content operation log row LLO4s, is written in the content data list CDL of the slave content presentation device 110f.

FIG. 52 shows an example of the content data list CDL presented on a display surface of a display serving as the presenter 4708 in a portable TV device implemented as the slave content presentation device 110f, similarly to FIG. 51. In this example, the content name ("title"), the ratio of the length of a part of the content stored in the slave content presentation device 110f to the original length of the whole content ("length"), and a reservation mode ("reservation") are displayed.

### (Seventh Embodiment)

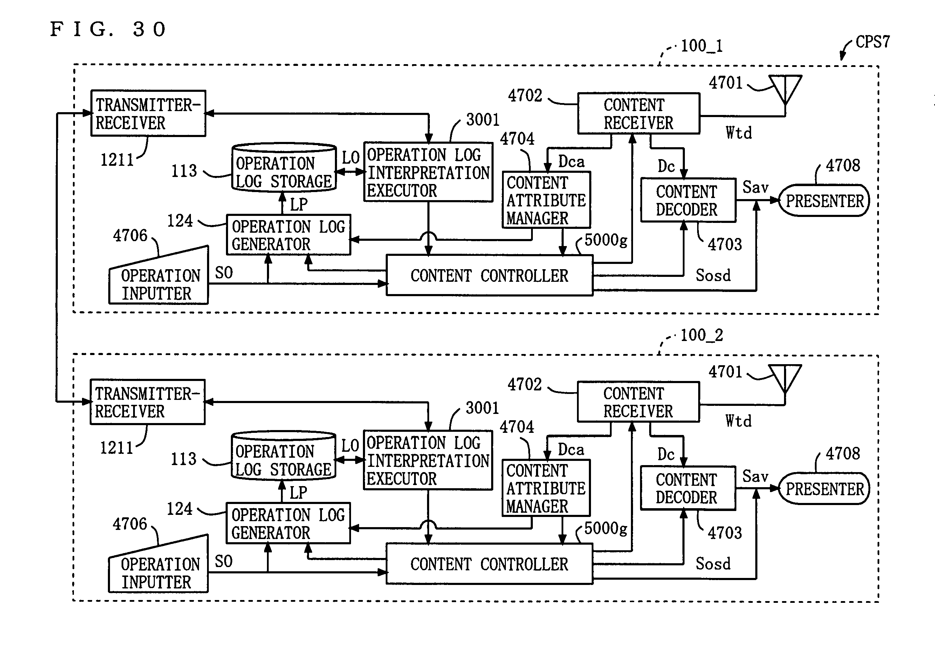

Hereinafter, a content presentation system according to a seventh embodiment of the present invention will be described with reference to FIG. 30, FIG. 31, FIG. 32 and FIG. 33. A content presentation system CPS7 according to the present embodiment functions to allow viewing information concerning the identical content to be shared between at least two identical and equivalent content presentation devices 100. Specifically, a user performs an adding operation while viewing the content data Dc by one of the content presentation devices 100, thereby changing the operation log. Then, the changed operation log LO is sent to the other content presentation device 100. Consequently, the information added to the time axis of the identical content data Dc can be shared between the two content presentation devices 100, i.e. , between a first user and a second user, without transferring the content data Dc itself.

As shown in FIG. 30, the content presentation system CPS7 in the seventh embodiment has the two content presentation devices 100. The content presentation device 100 is provided by the master content presentation device 120c shown in FIG. 12, from which the content storage 115 is removed, and in which the operation log interpretation executor 1223 and the content controller 5000c are replaced with a operation log interpretation executor 3001 and a content controller 5000g, respectively. It should be noted that, for the convenience of the description, one of the content presentation devices 100 (i.e., the upper one in FIG. 30) will be called a "first content presentation device 100_1", while the other content presentation device 100 (i.e., the lower one in FIG. 30) will be called a "second content presentation device 100_2" so that the users who operate these devices will be called a "first user" and a "second user" , respectively, thus distinguishing them from each other. Furthermore, the operation logs LO generated in the first content presentation device 100_1 and the second content presentation device 100_2 will be called a "first operation log LO_1" and a "second operation log LO_2" , respectively, thus distinguishing them from each other.

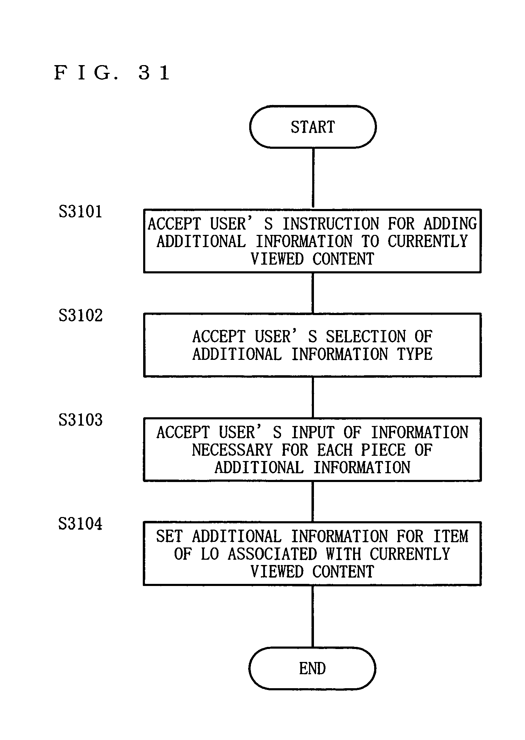

Next, referring to a flow chart shown in FIG. 31, the description will be made about a process for adding additional information to the operation log by the operation log interpretation executor 3001.
First, in Step S3101, an instruction for adding additional information to the content data Dc being currently viewed by the user is inputted via the operation inputter 4706. Then, the control proceeds to the next Step S3102.

In Step S3102, the selection of the type of the additional information made by the user is accepted. Specifically, the additional information selectable by the user is displayed on the presenter 4708. Then, the user utilizes the operation inputter 4706 to perform an operation of selecting one from among the displayed options. Based on this operation performed utilizing the operation inputter 4706, the selection of the type of the additional information made by the user is recognized and accepted in the present step.

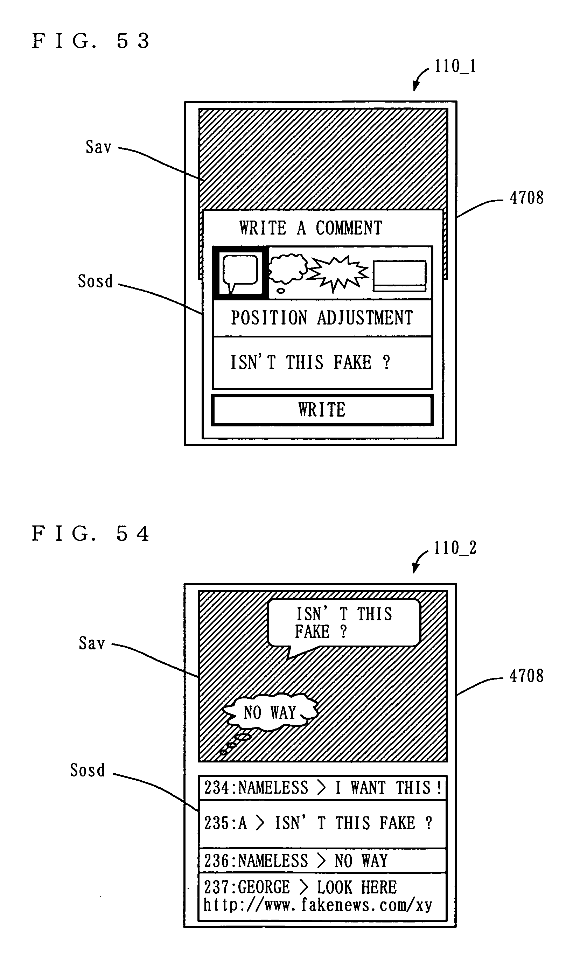

FIG. 53 shows a display example presented on a display serving as the presenter 4708 of a portable TV device implemented as the content presentation device 100_1 according to the present embodiment. Also in this diagram, a shaded portion represents an image reproduced and displayed based on an audio/video signal Sav, while the inside of a frame, displayed so as to be partially overlapped with the shaded portion, shows a message generated and displayed based on an OSD signal Sosd. In this case, this message (Sosd) indicates that the user can write a comment, and prompts the user to write a comment.

Specifically, in an upper part of the frame, the user-selectable additional information "WRITE A COMMENT" is displayed. The inside of the frame is divided into three sections one above the other. Further, in the upper section of the frame, several shapes of balloons for surrounding comments are displayed. In the middle section of the frame, an input for adjusting the position of a displayed comment on the display is accepted. Furthermore, in the lower section, a comment inputted by the user is accepted. It should be noted that, in the present example, the selection and input are performed so that the comment "ISN'T THIS FAKE?" written by the user is to be displayed within the shape of the leftmost displayed balloon.

Moreover, several operation requests for the second content presentation device 100_2 may be thought of as the types of the additional information. For example, such requests include: a request for starting the viewing of the content data Dc from a certain position thereof; a request for pasting a memo onto a certain position of the content data Dc; a request for permanently storing the content data Dc; a request for the acquisition via communication; and a request for the reservation-recording of the next program if the content data Dc is a drama series. Then, the control proceeds to the next Step S3103.

In Step S3103, based on the additional information whose selection has been accepted in Step S3102, an input of information necessary for the execution at the second content presentation device 100_2 by the user is accepted. The number of items of the inputted information and/or the value range permitted by each item are/is determined depending upon the type of the additional information whose selection has been accepted in Step S3102. For example, if the type of the additional information is a request for starting the viewing of the content data Dc, the option of viewing the content data Dc from the starting point thereof or viewing the content data Dc from a temporal position in the content data Dc reproduced when the user's instruction for adding the additional information in Step S3101 has been performed, and a free text such as a memo addressed to the user of the second content presentation device 100_2 may be thought of as the inputted necessary information. Alternatively, if the type of the additional information is a request for the acquisition via communication, the maximum value of the cost necessary for the communication, and the date and time when the acquisition should be completed may be thought of as the inputted necessary information. Then, the control proceeds to the next Step S3104.

In Step S3104, for the item of the operation log associated with the currently viewed content data Dc, the additional information is set in the operation log. The type of the additional information accepted in Step S3102, and the inputted information accepted in Step S3103 are written into the operation log of the currently viewed content data Dc. Then, the process is brought to an end.

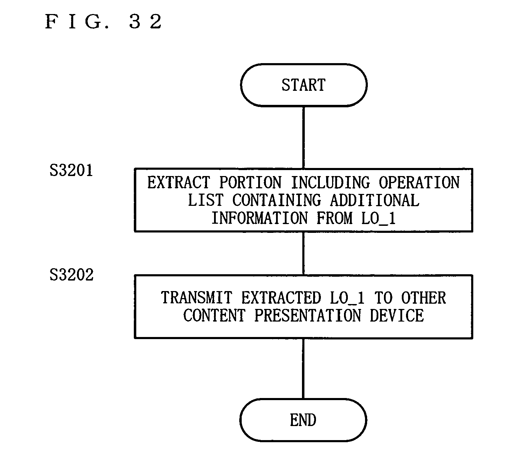

Next, referring to a flow chart shown in FIG. 32, the description will be made about the operation of transmitting the first operation log LO_1, which has been generated in the first content presentation device 100_1 and described with reference to FIG. 31, to the second content presentation device 100_2.
First, in Step S3201, a portion including the operation log information ILO containing the additional information is extracted from the first operation log LO_1. In other words, only a portion of the first operation log LO_1, which has been generated by the operation performed in accordance with the flow chart illustrated in FIG. 32 described above, is extracted. Then, the control proceeds to the next Step S3202.

In Step S3202, the operation log LO_1 extracted in Step S30201 described above is transmitted to the other content presentation device 100 (i.e., the second content presentation device 100_2 in the present example).

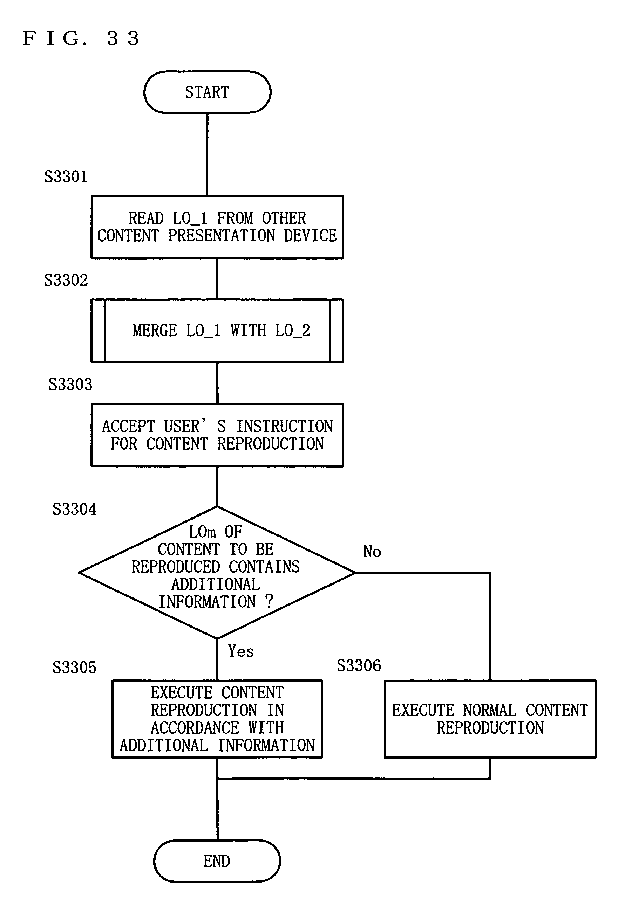

Next, referring to a flow chart shown in FIG. 33, the description will be made about a process for performing, in the second content presentation device 100_2, an operation according to the request made in the first content presentation device 100_1 by a user based on the first operation log LO_1 to which the additional information has been added in the first content presentation device 100_1.

First, in Step S3301, the operation log LO_1, to which the additional information is added and which is transmitted from the first content presentation device 100_1, is read into the second content presentation device 100_2. Then, the control proceeds to the next Step S3302.

In Step S3302, the read first operation log LO_1 is merged with the second operation log LO_2 in the second content presentation device 100_2, thus generating an operation log LOm. It should be noted that the merging process may be similar to the process carried out from Step S701 to Step S705 shown in FIG. 7 in the second embodiment. Then, the control proceeds to the next Step S3303.

In Step S3303, the user's instruction for the reproduction of the content data Dc is accepted, thus starting the reproduction. The start of reproduction of the content data Dc may be triggered by an operation directly performed on the operation inputter 4706 of the second content presentation device 100_2, or the completion of Step S3302. Then, the control proceeds to the next Step S3304.

In Step S3304, it is determined whether nor not the operation log LOm of the content data Dc to be reproduced contains the additional information added by the process carried out in accordance with the flow chart shown in FIG. 31. In the case of Yes, the control proceeds to the Step S3305. On the other hand, in the case of No, the control proceeds to Step S3306.

In Step S3305, the reproduction of the content data Dc is executed in accordance with the additional information. For example, if the type of the additional information is the start of viewing of the content data Dc, the reproduction is started from the point designated by the additional information. Further, if the type of the additional information is the pasting of a memo, in reproducing the content data Dc from the starting point or a certain point thereof, the memo is displayed on the presenter 4708 at the time point when the reproduction of the content data Dc has reached the position where the memo is pasted. Then, the process is brought to an end.

FIG. 54 shows an example of the additional information displayed in the present step. It should be noted that, in this example, there is shown a display example in which the comment, selectively inputted in the foregoing Step S3102 and described with reference to FIG. 53, is presented on a display serving as the presenter 4708 of a portable TV device implemented as the content presentation device 100_2. Also in this diagram, a shaded portion represents an image reproduced and displayed based on an audio/video signal Sav, balloons and comments are displayed so as to be overlapped with the shaded portion, and a frame portion located below the shaded portion shows messages each generated and displayed based on an OSD signal Sosd.

Specifically, on the display screen indicated by the shaded portion, the comment "ISN'T THIS FAKE?" inputted by the user in Step S3102, and the comment "NO WAY" inputted subsequently by the other user are displayed together with the respectively selected balloons. Furthermore, the comments are displayed in the frame portion in the order in which they are inputted.

In the present example, the four continuous comments are displayed sequentially from the top. Specifically, a comment 234 "I WANT THIS! "by a user name "NAMELESS" in the uppermost section, a comment 235 "ISN'T THIS FAKE?" by a user name "A" in the second section, a comment 236 "NO WAY" by a user name "NAMELESS" in the third section, and a comment 237 "LOOK HERE http://www.fakenews. com/xy" by a user name "GEORGE" in the fourth section are shown as being inputted in this time series.

In Step S3306, the normal reproduction of the content data Dc is performed. Then, the control is brought to an end.

It should be noted that the above-described first content presentation device 100_1 and second content presentation device 100_2 may be separate devices, or the first content presentation device 100_1 may simultaneously have the functions similar to those of the second content presentation device 100_2, while the second content presentation device 100_2 may simultaneously have the functions similar to those of the first content presentation device 100_1. Alternatively, even in a situation where three or more content presentation devices 100 are mutually connected, the content presentation system CPS7 according to the seventh embodiment is implementable. Thus, a comment can be shared between/among the content presentation devices 100_1 through 100_n (n is an arbitrary natural number).

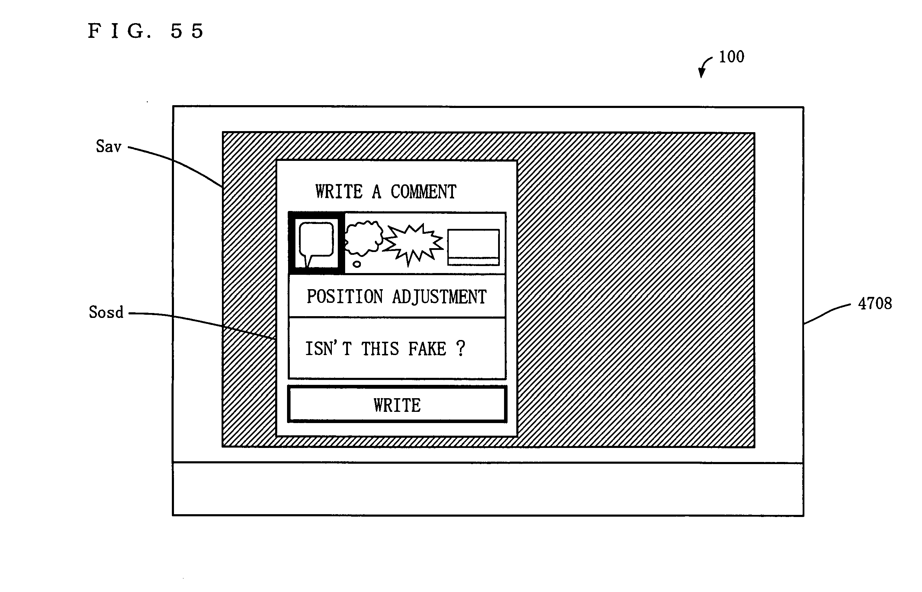

It should be noted that FIG. 55 shows a display example presented on a display serving as the presenter 4708 of a stationary TV device implemented as the content presentation device 100 according to the present embodiment. As described above, even if the content presentation device 100 is implemented as a portable TV device or a stationary TV device, the display presented on the presenter 4708 is basically similar to that already shown in FIG. 53.

### (Eighth Embodiment)

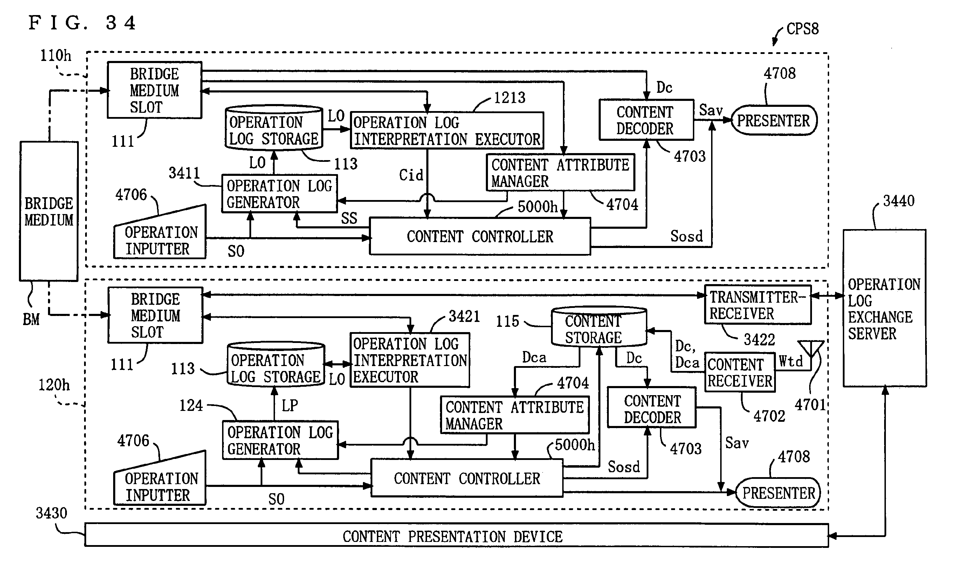

Hereinafter, a content presentation system according to an eighth embodiment of the present invention will be described with reference to FIG. 34, FIG. 35, FIG. 36 and FIG. 37. In addition to the functions of the content presentation system CPS7 according to the above-described seventh embodiment, a content presentation system CPS8 according to the present invention functions to change the designation of the temporal position of the content data Dc in the operation log LO by the slave content presentation device 110 instead of the first content presentation device 100_1 utilized by the first user, and functions to allow the master content presentation device 120 to provide detailed information to the operation log at the position changed by the slave content presentation device 110.

As shown in FIG. 34, the content presentation system CPS8 is configured analogously to the content presentation system CPS1 shown in FIG. 1. Specifically, the content presentation system CPS8 includes: a slave content presentation device 110h; a master content presentation device 120h; and an exchange log server 3440. The master content presentation device 120h is connected to the exchange log server 3440 via a communication line (not shown), and exchanges the operation log LO with a third content presentation device 3430 connected to the exchange log server 3440.

The communication line may be communication network such as Internet, public telephone line, or wireless communication. Further, the operation log exchange server may be a server for a file exchange software such as Napster in which Opennap protocol is implemented, or a file-exchange redirect server (cache server)
in which Gnutella or WPNP protocol is implemented. Furthermore, the third content presentation device 3430 is preferablyconfigured similarly to the master content presentation device 120h; however, the third content presentation device 3430 may be configured similarly to the above-described content presentation device 100 as long as it can exchange the operation log LO with the exchange log server 3440. It should be noted that the master content presentation device 120h may be implemented as a portable TV device as exemplarily illustrated in FIG. 48.

In the slave content presentation device 110h based on the slave content presentation device 110a, the operation log interpretation executor 112, the operation log generator 114 and the content controller 5000a are replaced with an operation log generator 3411, an operation log interpretation executor 1213 and a content controller 5000h, respectively. Furthermore, in the master content presentation device 120h based on the master content presentation device 120a, the operation log interpretation executor 122 and the content controller 5000a are replaced with an operation log interpretation executor 3421 and a content controller 5000h, respectively, and a transmitter-receiver 3422 is added.

The transmitter-receiver 3422 is connected, at one end thereof, to the bridge medium BM slot 111, and is connected, at the other end thereof, to the exchange log server 3440 via the communication line. The transmitter-receiver 3422 uploads the information, indicative of the existence of the operation log LO in the third content presentation device 3430, to the operation log exchange server 3440 in accordance with the protocol used by the operation log exchange server 3440. It should be noted that, depending upon the protocol used by the operation log exchange server3440, the entity of the operation log maybe uploaded directly to the operation log exchange server. Consequently, the operation log LO can be exchanged between the bridge medium BM inserted into the bridge medium slot 111 and the operation log exchange log server 3440.

At the slave content presentation device 110h, only the temporal position of the content data Dc is designated, and at the master content presentation device 120h, a comment for the designated position can be subsequently edited. Moreover, with the use of the file exchange server called the "operation log exchange server 3440", the operation log LO can be shared between/among an unspecified large number of users. Hereinafter, the sharing of the operation log LO between the master content presentation device 120h and the third content presentation device 3430 will be described. It should be noted that the eighth embodiment is implementable even if an arbitrary number of the content presentation devices 3430 are connected to each other via the operation log exchange log server 3440.

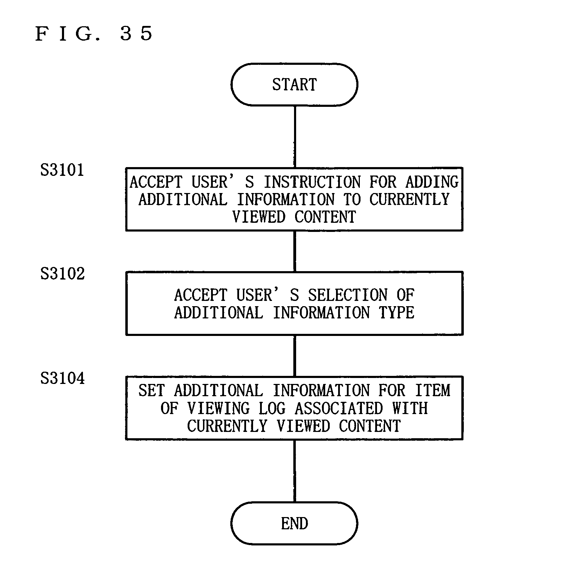

In the present specification, for the convenience of the description, the uploading of the information, indicative of the existence of the operation log LO in a certain third content presentation device 3430, to the operation log exchange server 3440 will also be referred to as "the uploading of the operation log LO to the operation log exchange server 3440". FIG. 35 shows a flow chart illustrating a process for adding additional information to the operation log LOs by the operation log generator 3411. The flow chart shown in this diagram is provided by removing Step S3103 from the flow chart already described and shown in FIG. 31. Consequently, in the present embodiment, the operation log LOs is generated without any input of information, which is necessary for each piece of additional information, from a user.

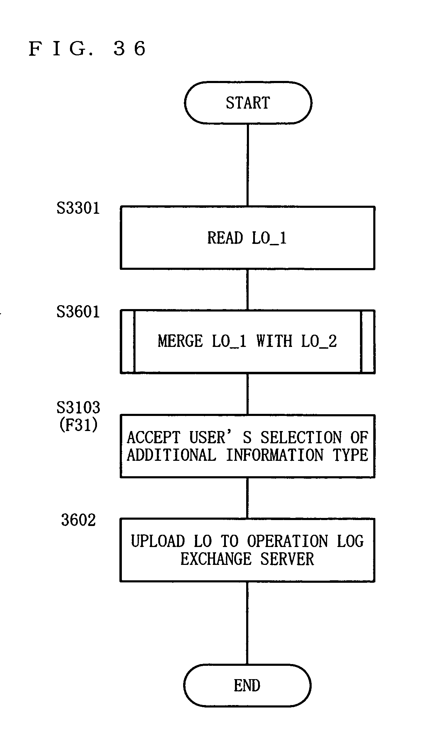

Next, referring to a flow chart shown in FIG. 36, a process for changing additional information in the master content presentation device 120h will be described.
First, in Step S3301, the first operation log LO_1 (operation log LOs), generated in the slave content presentation device 110h and stored in a bridge medium BM, is read. Then, the control proceeds to the next Step S3601.

In Step S3601, the first operation log LO_1 (operation log LOs) read in Step S3601 is merged with the second operation log LO_2 (operation log LOm) generated in the master content presentation device 120h. This process is similar to that in Step S701 through Step S705 described with reference to FIG. 7. Then, the control proceeds to the next Step S3103.

In Step S3103, the information, necessary for each piece of additional information and inputted by a user, is accepted, and is added to the operation log LO merged with the information necessary for the operation log. This process is similar to that in Step S3103 described with reference to FIG. 31. Then, the control proceeds to the next Step S3602.

In Step S3602, the operation log LO is uploaded to the operation log exchange server 3440. The uploading procedure is carried out in accordance with the protocol for the operation log exchange server 3440. Then, the process is brought to an end.

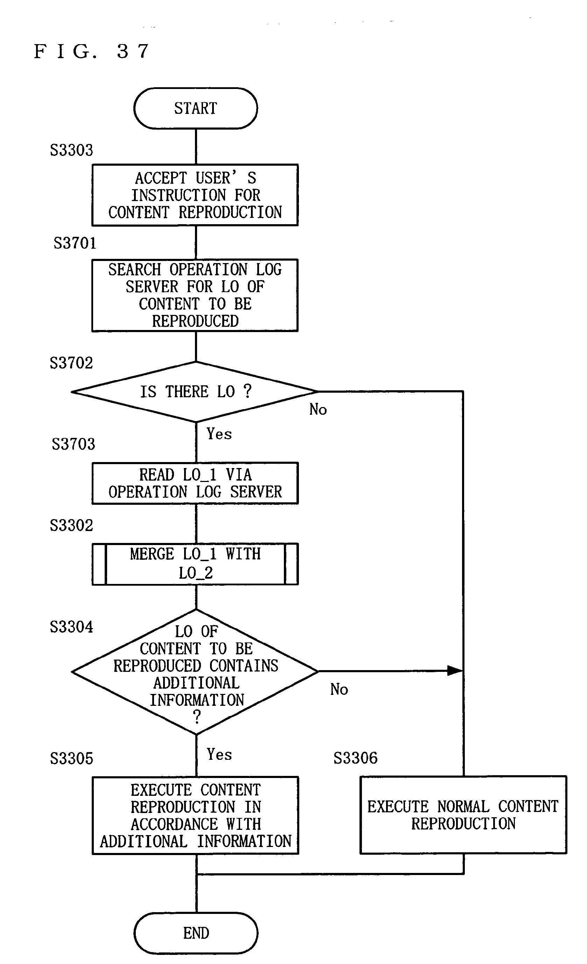

Next, referring to a flow chart shown in FIG. 37, the description will be made about a process for executing the additional information by the operation log interpretation executor (3421) in the third content presentation device 3430.
First, in Step S3701, the operation log exchange server 3440 is searched for the operation log LO of the content data Dc to be reproduced. The procedure of the search is carried out in accordance with the protocol used by the operation log exchange server. Then, the control proceeds to the next Step S3702.

In Step S3702 , if the sought operation log LO has been found in the operation log exchange server 3440, the control proceeds to the Step S3703. If the sought operation log LO has not been found, the control proceeds to Step S3306.

In Step S3703, the operation log LO is read into the third content presentation device 3430 via the operation log exchange server 3440. Then, the process is brought to an end.

### (Ninth Embodiment)

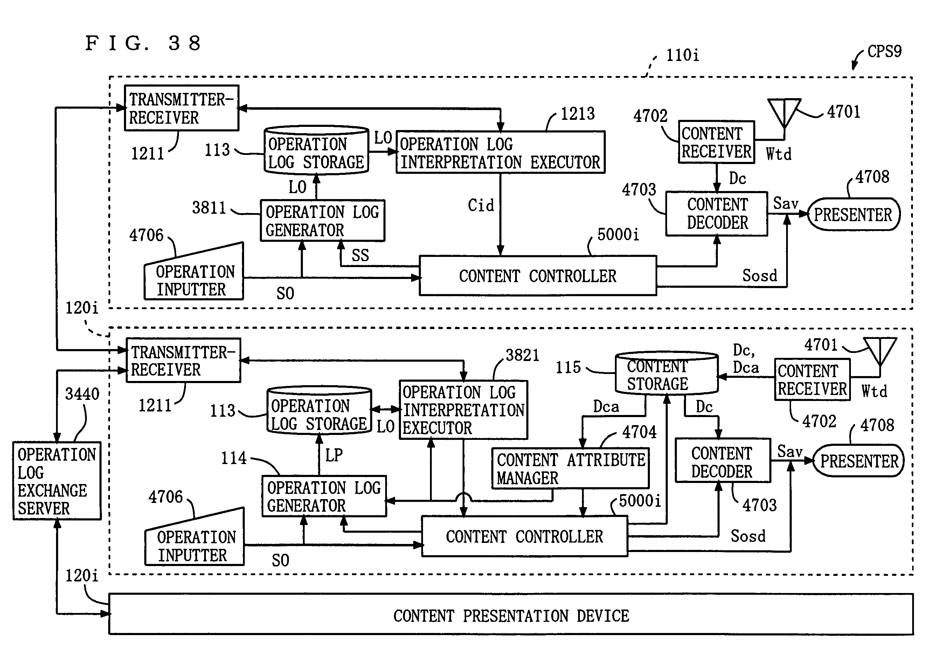

Hereinafter, a content presentation system according to a ninth embodiment of the present invention will be described with reference to FIG. 38, FIG. 39 and FIG. 40. In addition to the functions of the content presentation system CPS8 according to the eighth embodiment, a content presentation system CPS9 according to the present embodiment functions to allow the slave content presentation device 110 to have no content attribute data Dca and to generate only time information in response to a user's operation, and functions to allow the master content presentation device 120 to change the operation log based on the generated time information. Thus, in the present embodiment, even in the case where the slave content presentation device 110 is an analog broadcasting receiver or a sound only receiver, the functions similar to those of the eighth embodiment are implementable.

As shown in FIG. 38, the content presentation system CPS9 is configured analogously to the content presentation system CPS3 shown in FIG. 12. Specifically, the content presentation system CPS9 includes a slave content presentation device 110i, a master content presentation device 120i, and an operation log exchange server 3440. The master content presentation device 120i is connected to the exchange log server 3440 via a communication line (not shown), and exchanges the operation log LO with a third content presentation device 120c connected to the exchange log server 3440.

In the slave content presentation device 110i based on the slave content presentation device 110c, the simplified operation log generator 1212 and the content controller 5000c are replaced with an operation log generator 3811 and a content controller 5000i, respectively. In the master content presentation device 120i based on the master content presentation device 120c, the operation log interpretation executor 1223 and the content controller 5000c are replaced with an operation log interpretation executor 3821 and a content controller 5000i, respectively.

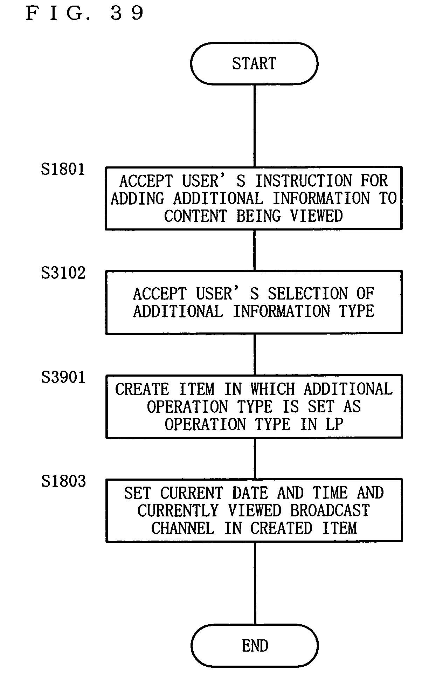

Next, referring to a flow chart shown in FIG. 39, the description will be made about a process for adding additional information to the operation log LO by the slave content presentation device 110i.
First, in Step S1801, a user's instruction for adding additional information to a content being viewed is accepted. Then, the control proceeds to the next Step S3102.

In Step S3102, the user's selection of the type of the additional information is accepted. Then, the control proceeds to the next Step S3901.

In Step S3901, an item, in which the type of the additional information selected by the user and accepted in Step S3102 is set as the operation type, is created for the simplified operation log LP. Then, the control proceeds to the next Step S1803.

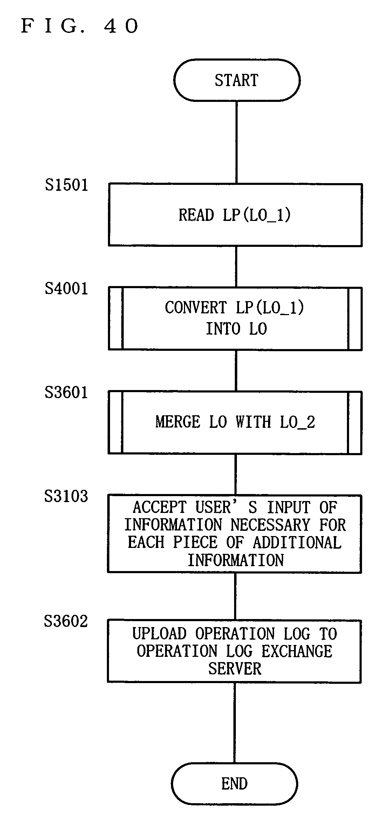

Referring to a flow chart shown in FIG. 40, the description will be made about a process for changing the additional information by the master content presentation device 120i.
First, in Step S1501, the simplified operation log LP (first operation log LO_1) is read from the slave content presentation device 110i. Then, the control proceeds to the next Step S4001.

In Step S4001, the simplified operation log LP (first operation log LO_1) read in Step S1501 is converted into an operation log LO. This process may be similar to that in Step S1502 through Step S1508 in the flow chart shown in FIG. 15. Then, the process proceeds to the next Step S3601.

In Step S3601, the operation log LO is merged with the operation log LOs generated in the master content presentation device 120i. Then, the process proceeds to the next Step S3103.

In Step S3103, an input of information, which is necessary for each piece of additional information, by the user is accepted. Then, the control proceeds to the next Step S3602.

In Step S3602, the operation log LO is uploaded to the operation log exchange server 3440. Then, the process is brought to an end.

### (Tenth Embodiment)

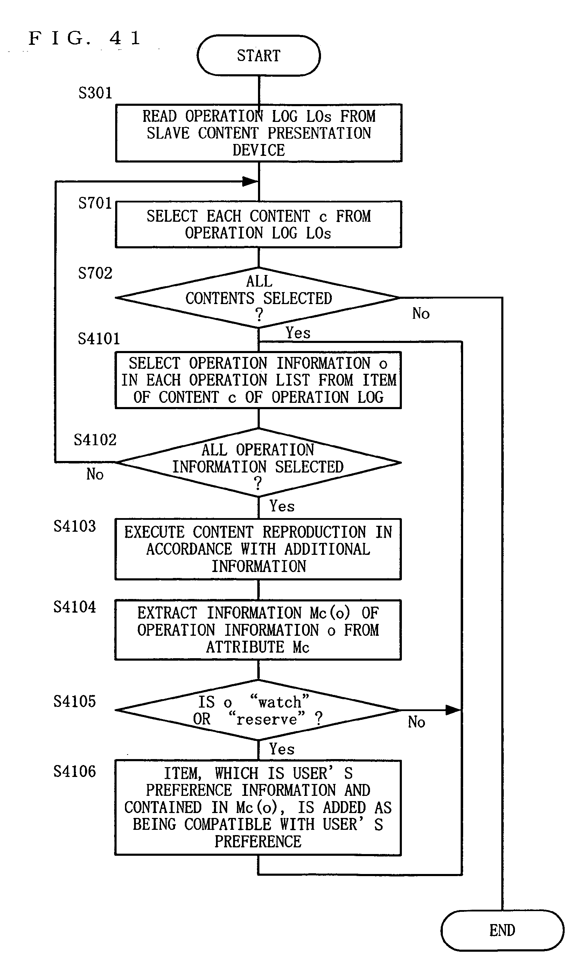

Hereinafter, a content presentation system according to a tenth embodiment of the present invention will be described with reference to FIG. 41. In addition to the functions of the content presentation system CPS9, a content presentation system CPS10 according to the present embodiment functions to allow the slave content presentation device 110 to generate an operation log and pass it to the master content presentation device 120, and functions to allow the master content presentation device 120 to analyze the operation log for metadata with respect to the time axis in the content data Dc, thus enabling the extraction of user's preference information in more detail with respect to the time axis. Therefore, except that the content controller 5000i is replaced with a content controller 5000j, the content presentation system CPS10 is configured basically similarly to the content presentation system CPS9. Consequently, the content presentation system CPS10 includes a slave content presentation device 110j and a master content presentation device 120j instead of the slave content presentation device 110i and the master content presentation device 120i.

Referring to a flow chart shown in FIG. 41, the description will be made about a process for extracting detailed preference information by the master content presentation device 120j in the tenth embodiment. There is provided the flow chart. First, in Step S301, the operation log LOs is read from the slave content presentation device 110j. Next, in Step S701, contents c are each selected based on the operation log LOs. At the time point when all the contents C have been selected (Step S702), the control proceeds to the next Step S4101.

In Step S4101, pieces of operation information o in the operation log information ILO are each selected from items of the content data Dcc selected in Step S701. Then, the control proceeds to the next Step S4102.

In Step S4102, it is determined whether or not all pieces of the operation information have already been selected in Step S4101, and there is no operation information that should be selected. In the case of No, the control returns to Step S701 described above. In the case of Yes, the control proceeds to the next Step S4103.

In Step S4103, from the content attribute data Dca stored in the content attribute data manager 4704, the attribute of the content data Dc is selected and set as Mc. Then, the control proceeds to the next Step S4104.

In Step S4104, from the content attribute data Mc, information Mc (o) concerning the temporal position of the operation information o is extracted. It should be noted that the operation information o contains time point information. On the other hand, the content attribute data Mc contains information for the time axis from the starting point of the content data Dcc. For example, if the content data Dc is a visual program, this information indicates what kind of a person will make an appearance and what this scene will be like at how many minutes and seconds after the starting point of the program. This information may be expressed with a program index specified by STB-B10 by Association of Radio Industries and Business, which is the digital broadcast standard in Japan. Then, the control proceeds to the next Step S4105.

In Step S4105, it is determined whether or not the operation information o is "watch" or "reserve". In the case of Yes, the control proceeds to Step S4106. On the other hand, in the case of No, the control returns to Step S701.

In Step S4106, the item, which is user's preference information and contained in Mc (o), is added as being compatible with the user's preference. Then, the control returns to Step S701. If the user designates "watch" or "reserve" in the slave content presentation device 110j, the viewing start or reserving process is executed in the master content presentation device 120 j . Thus, the user shows some sort of interest in the content data Dc, and the preference is obtainable from the program attribute information at this time point.

### (Eleventh Embodiment)

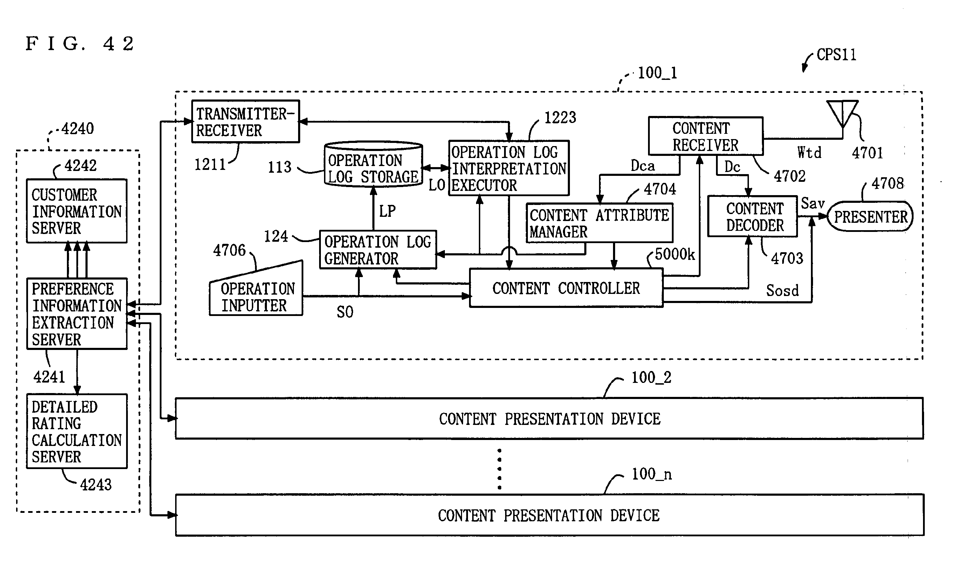

Hereinafter, a content presentation system according to an eleventh embodiment of the present invention will be described with reference to FIG. 42, FIG. 43 and FIG. 44. A content presentation system CPS11 according to the present embodiment functions to allow the slave content presentation device 110 to generate an operation log and pass it to a server, and functions to allow the server to analyze the operation log LO for metadata with respect to the time axis in the content data Dc, thus enabling the extraction of user's preference information in more detail with respect to the time axis. Furthermore, the present system also functions to analyze the operation logs from a plurality of the viewing devices to perform a statistical process, thus obtaining detailed rating information with respect to the time axis in the content data Dc.

As shown in FIG. 42, the content presentation system CPS11 according to the eleventh embodiment includes a first content presentation device 100_1 through an n-th content presentation device 100 100_n, and a server 4240. The n number of the content presentation devices 100_1 through 100_n are each connected to the server 4240 via a communication line (not shown). The server 4240 includes a preference information extraction server 4241, a customer information server 4242, and a detailed rating calculation server 4243. It should be noted that the n number of the content presentation devices 100_1 through 100_n are preferably configured similarly to each other. As shown in FIG. 42 in detail, in the first content presentation device 100_1 based on the slave content presentation device 110g shown in FIG. 30, the operation log interpretation executor 3001 is replaced with an operation log interpretation executor 4211.

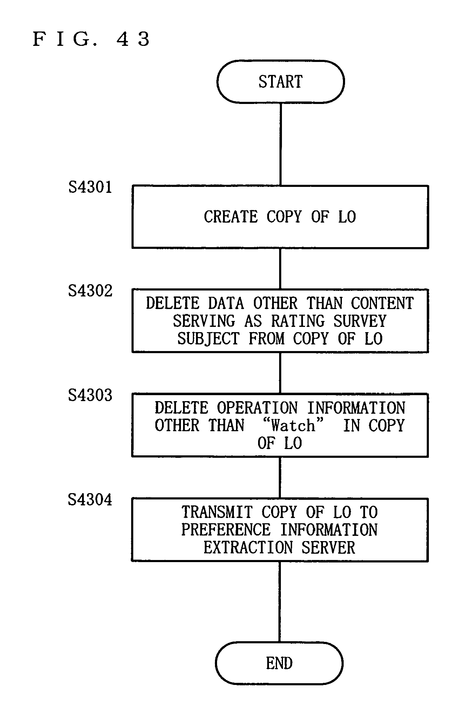

Next, referring to FIG. 43, the description will be made about a process for uploading the operation log LO to the server 4240 by the operation log interpretation executor 4211.
First, in Step S4301, a copy of the operation log LO stored in the operation log storage 113 is created. Then, the control proceeds to the next Step S4302.

In Step S4302, the data other than the content data Dc serving as the rating survey subject is deleted from the copy of the operation log LO created in Step S4301. The criterion for determining whether or not the data is the content data Dc serving as the rating survey subject may be designated by the preference information extraction server 4241 to be connected. For example, only the data for a particular broadcast channel may conceivably be selected. Then, the control proceeds to the next Step S4303.

In Step S4303, the operation information other than "watch" in the copy of the operation log LO is deleted. In other words, the information having no meaning in the operation log information ILO is deleted from the operation log LO. For example, only an element of the type of the operation log information ILO indicative of viewing is extracted from the operation log in this step. It should be noted that, from the standpoint that the user's demand is stronger for performing reservation, "reserve" may be extracted. Then, the control proceeds to the next Step S4304.

In Step S4304, the copy of the operation log, which has been subjected to Step S4303, is transmitted to the preference information extraction server 4241. The present invention is implementable irrespective of the type of the specific transmitting-receiving protocol or communication line. Then, the process is brought to an end.

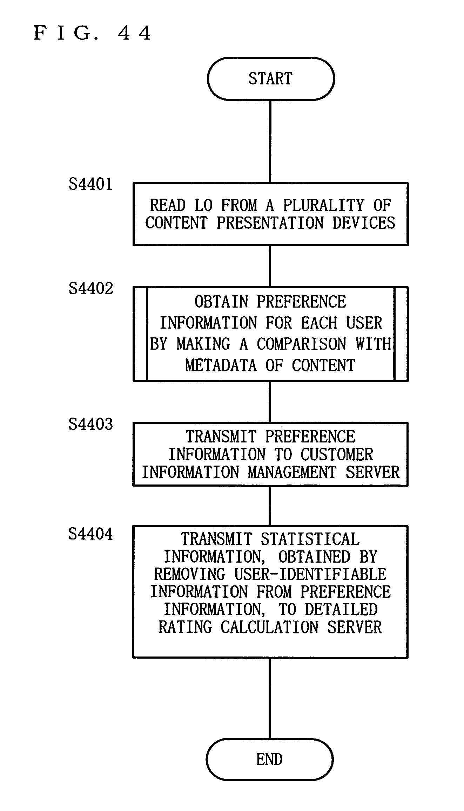

Next, referring to a flow chart shown in FIG. 44, the description will be made about the extraction of detailed information by the server 4240 based on the operation log LO transmitted from the slave content presentation device 110_1.
First, in Step S4401, the operation logs LO are read from a plurality of the content presentation devices 100_1 through 100_n. It should be noted that these operation logs LO are (copies of) the operation logs transmitted in Step S4304 . Then, the control proceeds to the next Step S4402.

In Step S4402, preference information is obtained for each user by making a comparison with the metadata of the content data Dc. This process may be similar to that in Step S701 through Step S4106 in the flow chart shown in FIG. 41. Then, the control proceeds to the next Step S4403.

In Step S4403, the preference information is sent to the customer management server 4242. The customer management server 4242 is a server for performing a so-called "CRM (Customer Relationship Management) " process . "CRM" means a marketing model for continuing reliable relationship by managing the repeated interactions, for example, between the provision of products and services to each user and the customer's (user's) reaction to it. The customer management server 4242 absorbs the preference information for each person, thus enabling the provision of products and services more appropriate for each customer. Then, the control proceeds to the next Step S4404.

In Step S4404, statistical information, which has been obtained by removing user-identifiable information from the preference information, is sent to the detailed rating calculation server 4243 by the preference information extraction server 4241. Methods for removing the user-identifiable information include a method in which "id" or the like for identifying each user is simply eliminated and the preference information for an anonymous user is sent as it is. Alternatively, a statistical process for aggregating the preferences of all the users may be performed for each preference subject. Then, the process is brought to an end.

It should be noted that, in Step S4402, it is possible to extract the information indicative of in which temporal position or constituent element (e.g., a person who makes an appearance) of the content data Dc the users are interested. Thus, unlike the conventional TV rating survey that suggests how many people are watching the program (content data Dc), more detailed information can be extracted.

### (Twelfth Embodiment)

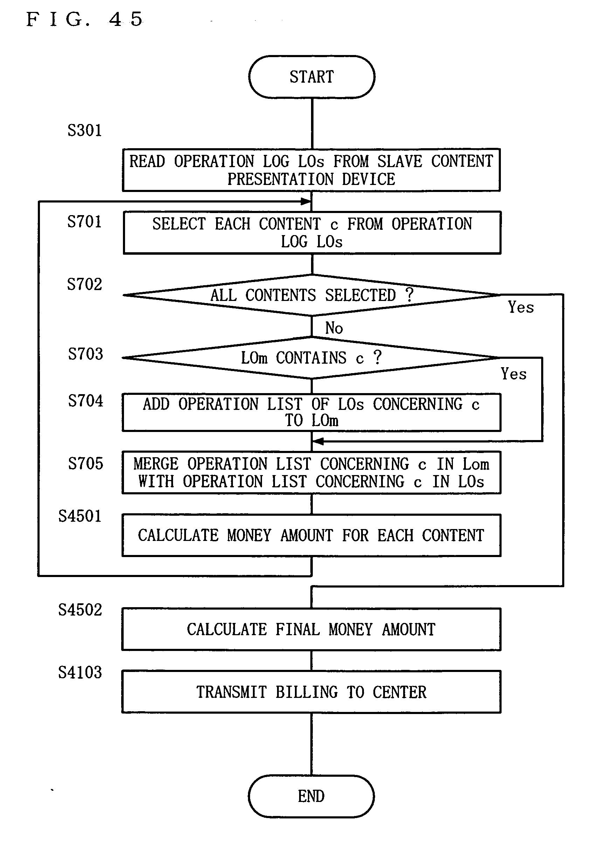

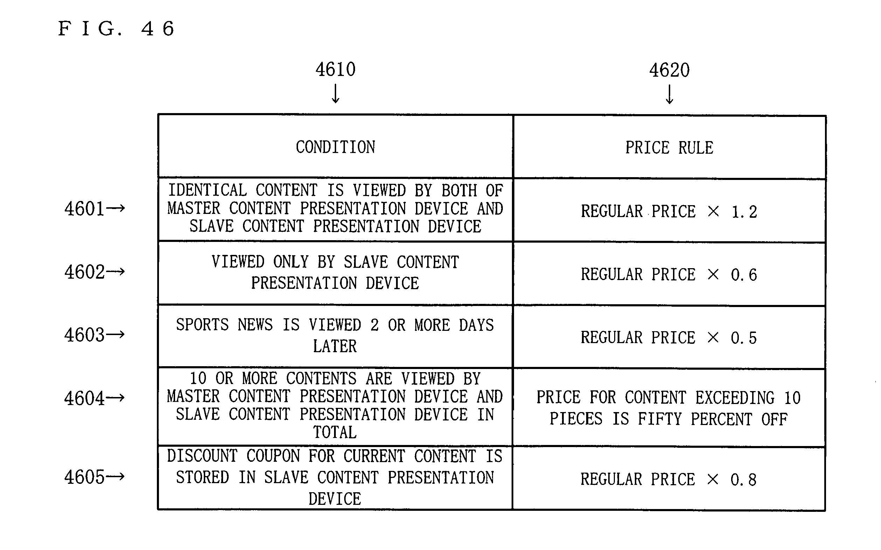

Hereinafter, a content presentation system according to a twelfth embodiment of the present invention will be described with reference to FIG. 45 and FIG. 46. A content presentation system CPS12 according to the present embodiment functions to generate a piece of fee charge result information by aggregating the operation logs LO_1 through LO_n of a plurality of viewing devices 100_1 through 100_n, and to perform a fee charge process on the fee charge result information at a time in a server. It is unnecessary to include a function of generating fee charge result information for each of a plurality of the viewing devices 100_1 through 100_n, and the number of fee charge processes is reduced, thus decreasing the process burden on both of the viewing devices and the server. Consequently, it is possible to realize services such as a process for weighting fee charge in accordance with the quality during viewing, and a discount due to the collective viewing with a plurality of the viewing devices.

The content presentation system CPS12 in the twelfth embodiment is configured analogously with the content presentation system CPS11 shown in FIG. 42. However, the content controller 5000k is replaced with a content controller 5000L. It should be noted that, in the content presentation system CPS12, among the n number of the content presentation devices 100_1 through 100_n, at least one device is used as a center device for performing a process on a fee charge result information, at least one device is used as a slave content presentation device (110L) for performing only viewing, and at least one device is used as a master content presentation device (120L) for performing a fee charge process with the center device in addition to the viewing.

The fee charge result information of the slave content presentation device (110L) and that of the master content presentation device (120L) are collectively reported to the server 4240 by the master content presentation device (120L). Referring to a flow chart shown in FIG. 45, the description will be made about a merging process for the operation logs LO_1 through LO_n of the n number of the content presentation devices 100_1 through 100_n.

First, after having going through the processes in Steps S301, S701, S702, S703, S704 and S705 described above, the control proceeds to Step S4501.
In Step S4501, for the content data Dc selected in Step S701, the amount of money that should be paid due to the viewing thereof is calculated. The calculation is carried out with reference to a fee charge rule. It should be noted that the operation logs of the content data Dc selected in Step S701 have been merged in the previous step. Then, the amount of money that should be paid is calculated based on the viewing result stored in the operation log for each content data Dc.

FIG. 46 shows an example of the fee charge rule in the twelfth embodiment. The fee charge rule has a data structure in tabular form in which each row shows a rule, and includes: a condition column 4610 for storing fee charge conditions; and a price rule column 4620 for defining calculation methods. For example, if the identical content data Dc is viewed by both of the master content presentation device (120L) and the slave content presentation device (110L), a row 4601 is applied, in which the price for viewing the content data Dc by two devices is not twice as much as the regular price but is reduced to 1.2 times as much as the regular price.

Alternatively, if certain content data Dc is viewed by the slave content presentation device (110L), a row 4602 is applied, in which the price is reduced to 60 percent of the regular price. Thus, it is possible to satisfy a user's desire for more inexpensive viewing when the display resolution of the slave content presentation device 110a is lower than that of the master content presentation device (120L). Then, the control returns to Step S701.

After going through Step S701, if it is determined that all the contents have already been selected in Step S702 , the control proceeds to Step S4502.
In Step S4502, the final money amount is calculated. Since the money amount f or all the content data Dc has been calculated, the final money amount is calculated in this step. Also at this time, the calculation is carried out based on the fee charge rule. For example, if twelve or more pieces of the content data Dc are viewed by the master content presentation device (120L) and the slave content presentation device (110L) in total, a column 4604 for a fee charge rule 4600 is applied, in which the price for two pieces of the content data Dc exceeding ten pieces of the content data Dc is 50 percent off. Then, the control proceeds to the next Step S4503.

In Step S4503, the billing is transmitted to the center device. Then, the process is brought to an end.

As described above, in the viewing systems according to the present invention, it is possible to omit a user's cumbersome operation in which the user is concerned about the specifications of viewing devices and data location of the content data Dc. That is, instead of the conventional world-view in which the content data Dc is stored so as to be subordinate to the viewing devices, there is realized the operability with the world-view focused on the content data Dc, in which the content data Dc first exists and the content data Dc is accessed via a plurality of viewing devices so that the viewing devices are subordinate to the content data Dc.

More specifically, according to the first embodiment, a continuation or unviewed portion of the content data that has been viewed in one of the viewing devices can be continuously viewed in the other viewing device. Thus, even if an operation is performed using a plurality of the viewing devices, the viewing is enabled with an operation feeling that the identical content data is referenced in a shared manner between/among a plurality of the viewing devices without performing any special operation.

According to the second embodiment, in addition to the effects of the first embodiment, the viewing is enabled with an operation feeling that the identical content data is referenced in a shared manner even if a viewing operation is performed using a plurality of, i.e., two or more, devices. Furthermore, the viewing is enabled with an operation feeling that the identical content data is referenced in a shared manner even in using the three or more viewing devices.

According to the third embodiment, even in the case where a slave content presentation device is a device having no content attribute data such as EPG, the viewing is enabledwith the operation feeling similar to those of the first and second embodiments. Furthermore, even in the case where a path through which the content data is transmitted is provided between digital broadcasting and analog broadcasting, between broadcasting and streaming via communication, and between packaged media and streaming via communication, the viewing is enabled with the similar operation feeling. For example, even if the slave content presentation device is a device for receiving analog broadcasting, the present embodiment is implementable.

According to the fourth embodiment, a user performs a reserving operation during the viewing in a slave content presentation device, thus enabling a reservation such as the viewing and/or acquisition of the content data Dc in a master content presentation device. For example, a reserving operation is performed during the viewing of an on-air program in the slave content presentation device, thereby allowing the reservation, i.e., viewing and/or recording, of the content data, for which the reserving operation has been performed, to be executed in the master content presentation device.

According to the fifth embodiment, a user performs a reserving operation during the reproduction of the content data obtained sequentially via communication or broadcasting in a slave content presentation device, thus enabling the execution of the reservation of the content data sequentially for broadcasting or communication in a master content presentation device.

According to the sixth embodiment, a user performs a reserving operation during the viewing of a summary of the content data in a slave content presentation device, thus enabling the execution of a reservation such as viewing and/or acquisition of content data Dc in a master content presentation device 120a. For example, the slave content presentation device is a content data viewer using a memory card, and the master content presentation device includes a function of receiving the content data and a function of writing the content data and a summary of the content data into the memory card. Further, a reserving operation is performed while the summary of the content data in the memory card is being viewed in the slave content presentation device, thereby enabling an instruction for reservation-recording of the content data or writing of the content data into the memory card at the master content presentation device.

According to the seventh embodiment, a user performs an adding operation while viewing the content data by a first user' s viewing device, thereby changing an operation log. Then, the changed operation log is transferred from the viewing device to the other viewing device, thus enabling the content data to be reproduced at a second user's viewing device based on the changed operation log. For example, the time position in the content data designated by the adding operation is selectively reproduced, and/or a memo added to the time axis of the content data Dc is displayed during the reproduction, thereby enabling the information added to the time axis of the identical content data to be shared between the viewing devices, i.e., between the first user and the second user, without transferring the content data itself.

According to the eighth embodiment, in addition to the effects of the seventh embodiment, there are included a slave content presentation device for changing the designation of a temporal position of the content data in an operation log instead of the first user's viewing device, and a master content presentation device for providing detailed information to the operation log at the position designated by the slave content presentation device. Thus, at the slave content presentation device, only the temporal position of the content data is designated, and at the master content presentation device, a comment for the designated position can be subsequently edited. Moreover, with the use of a file exchange server called an "operation log exchange server", the operation log can be shared between/among an unspecified large number of users.

According to the ninth embodiment, in addition to the effects of the eighth embodiment, a slave content presentation device has no content attribute data and generates only time information in response to a user's operation, and a master content presentation device changes an operation log based on the generated time information. Thus, even in the case where the slave content presentation device is an analog broadcasting receiver or a sound only receiver, the functions similar to those of the eighth embodiment are implementable.

According to the tenth embodiment, a slave content presentation device generates an operation log and passes it to a master content presentation device, and the master content presentation device analyzes the operation log for metadata with respect to the time axis in the content data, thus enabling the extraction of user's preference information in more detail with respect to the time axis.

According to the eleventh embodiment, a slave content presentation device generates an operation log and passes it to a server, and the server analyzes the operation log for metadata with respect to the time axis in the content data, thus enabling the extraction of user's preference information in more detail with respect to the time axis. Furthermore, the operation logs from a plurality of viewing devices are analyzed to perform a statistical process, thus making it possible to obtain detailed rating information with respect to the time axis in the content data.

According to the twelfth embodiment, a piece of fee charge result information can be generated by aggregating operation logs of a plurality of viewing devices, and a fee charge process can be performed on the fee charge result information at a time in a server. Thus, it is unnecessary to include a function of generating fee charge result information for each of a plurality of the viewing devices, and the number of fee charge processes is reduced, thus decreasing the process burden on both of the viewing devices and the server. It is possible to realize services such as a process for weighting fee charge in accordance with the quality during viewing, and a discount due to the collective viewing with a plurality of the viewing devices.

### INDUSTRIAL APPLICABILITY

The present invention is suitable for use in allowing a content to be received and viewed using a plurality of content presentation devices, and is specifically applicable to a digital broadcasting receiver or the like.

## Claims

1. A content presentation system (CPS1) comprising a slave content presentation device (110a) and a master content presentation device (120a),
the slave content presentation device (110a) comprising:
operation input means (4706) through which an operation of a user is inputted;
first content control means (5000a) for operating a content (Dc) by being controlled by an output (SO) from the operation input means (4706); and
operation log generation means (114) for generating, based on the output (SO) from the operation input means (4706), an operation log (LO) serving as a history of an operation for each content,
the master content presentation device (120a) comprising:
operation log interpretation execution means (122) for receiving, as an input, the operation log (LO) and for outputting an interpretation result; and
second content control means (5000a) for controlling the operation of the content, based on the interpretation result of the operation log interpretation execution means (122).

2. The content presentation system (CPS1) according to Claim 1,
wherein the operation log (LO) is a set of elements including a set of operation information (IO) consisting of an operation type and an operation parameter, and a set of a content identifiers (Cid), and
wherein the operation parameter includes information indicative of a time position in the content, at which an operation of the operation type is performed, in the content (Dc) identified by the content identifier (Cid).

3. The content presentation system (CPS1) according to Claim 2,
wherein the operation information (IO) includes information indicating the order in which the user has performed operations.

4. The content presentation system (CPS1) according to Claim 2 or Claim 3,
wherein the interpretation result of the operation log interpretation execution means (122) indicates a candidate for the content (Dc) to be operated in the master content presentation device (120a) based on the operation log (LO) generated in the slave content presentation device (110a), and a candidate for a time position in the content.

5. The content presentation system (CPS1) according to Claim 4,
wherein the candidates for the content to be operated and a time position in the content are indicated by the interpretation result of the operation log interpretation execution means (122) by giving priority to, among the information included in the operation parameter and indicative of a time position in the content, the information indicative of the farthest position, and by giving priority to the latest operation information IO in the operation order of the operation parameter.

6. The content presentation system (CPS1) according to Claim 4,
wherein the candidates for the content (Dc) to be operated and a time position in the content are indicated by the interpretation result of the operation log interpretation execution means (122) by giving priority to a time position in the content in which information included in the operation parameter and indicative of a time position in the content (Dc) does not exist in any of the operation information (IO) associated with the content identifier (Cid).

7. The content presentation system (CPS1) according to any one of Claims 1 to 6,
wherein the slave content presentation device (110a) includes a first bridge medium slot (111) into which a bridge medium (BM) for storing the content (Dc) and the operation log (LO) is inserted,
wherein the first content control means (5000a) operates the content (Dc) stored in the bridge medium (BM),
wherein the master content presentation device (120a) includes a second bridge medium slot (111) into which the bridge medium (BM) is inserted, and
wherein the operation log interpretation execution means (122) performs interpretation by taking out the operation log (LO) from the bridge medium (BM) inserted into the second bridge medium slot (111).

8. The content presentation system (CPS1) according to Claim 7,
wherein the master content presentation device (120a) comprises:
content receiving means (4701, 4702) for receiving the content (Dc) and content attribute (Dca); and
content storage means (115) for storing the content and the content attribute received by the receiving means (4701, 4702), and
wherein the second content control means (5000a) writes one or more of the content (Dc) into the bridge medium (BM) inserted into the second bridge medium slot (111) from the content storage means (115), and generates a list of the written contents from the content attribute (Dca) to write the list into the bridge medium (BM) inserted into the second bridge medium slot (111).

9. The content presentation system (CPS3) according to Claim 2 or Claim 3,
wherein the master content presentation device (120c) comprises:
second operation input means (4706) through which an operation of a user is inputted; and
second operation log generation means (124) for generating, based on an output (SO) from the second operation input means(4706), an operation log (LOm) serving as a history of an operation for each content,
wherein the second content control means (5000a) operates the content (Dc) by being controlled by the output (SO) from the second operation input means (4706), and
wherein the operation log interpretation execution means (122b) merges the operation log (LOs) of the slave content presentation device (110a) with the operation log (LOm) of the master content presentation device (120b).

10. The content presentation system (CPS) according to Claim 9,
wherein the operation log interpretation execution means uses the merging result to obtain the candidates for the content to be operated in the master content presentation device and the time position in the content.

11. The content presentation system (CPS) according to Claim 10,
wherein the operation log (LO) comprises an existence flag indicating that the content (Dc) identified by the content identifier (Cid) is operable, and only the content (Dc) identified by the content identifier (Cid) associated with the operation information (10), in which the value of the existence flag is true, is a subject of an operation.

12. The content presentation system (CPS3) according to Claim 10,
wherein: the operation log generation means (1212) generates a simplified operation log (LP) that stores a channel on which the content (Dc) is delivered and a time point at which an operation is performed, instead of the content identifier (Cid) in the operation log (LO) of the slave content presentation device (110a); the content attribute (Dca) comprises information convertible into the content identifier (Cid) from the channel and the time point; and the operation log interpretation execution means (1223) of the master content presentation device (120c) uses the content attribute (Dca) to convert the simplified operation log (LP) into the operation log (LO).

13. The content presentation system according to Claim 12,
wherein in the slave content presentation device (110a), the operation log generation means generates, based on an output (SO) from the first operation input means (4706), the simplified operation log (LP) in which the operation type is a reservation, and
wherein the operation log interpretation execution means of the master content presentation device (120a) executes a reserving operation on an element of the operation log (LO) which results from the conversion from the simplified operation log (LP) and in which the operation type is a reservation.

14. The content presentation system according to Claim 2 or Claim 3,
wherein the master content presentation device (120a) comprises:
content communication means for acquiring a content by connecting with a communication line; and
a receive address for the communication line corresponding to the content identifier (Cid) in the content attribute (Dca),
wherein the operation log interpretation execution means of the master content presentation device (120a) uses the content attribute (Dca) to convert the content identifier (Cid) of the operation log into the receive address, and
wherein the content communication means acquires a content identified by the receive address.

15. The content presentation system according to Claim 2 or Claim 3,
wherein the slave content presentation device (110a) further comprises second content storage means for storing a summary of the content (Dc) as a content, and
wherein the operation log interpretation execution means of the master content presentation device (120a) performs a process based on the operation log (LOs) from the slave content presentation device (110a).

16. The content presentation system according to Claim 15,
wherein the operation log generation means of the slave content presentation device (110a) generates an operation log in which the operation type is downloading, and
wherein based on the operation log (LOs) from the slave content presentation device (110a), the whole content is sent to the second content storage means for an element in which the operation type is a reservation.

17. The content presentation system according to Claim 15,
wherein the operation log generation means of the slave content presentation device (110a) generates an operation log in which the operation type is additional information, and
wherein based on the operation log from the slave content presentation device (110a), the operation log interpretation execution means controls the presentation of the content in accordance with the additional information when the content, identified by the content identifier (Cid) in an element in which the operation type is the additional information, is presented to a user.

18. The content presentation system according to Claim 17,
wherein the control of the presentation is displaying of the additional information for a content reproduction position.

19. The content presentation system according to Claim 17,
wherein the control of the presentation is partial presentation of the content based on the additional information.

20. The content presentation system according to Claim 17,
wherein the operation log generation means of the slave content presentation device (110a) generates an operation log in which the operation type is additional information, and information indicative of a time position in the content, which designates a position of the content, is stored as the operation parameter,
wherein the master content presentation device (120a) comprises second operation input means, and
wherein in the case of an element of the operation log in which the operation type is additional information, the operation log interpretation execution means of the master content presentation device (120a) performs writing to the parameter of the element of the operation log, in which the operation type is additional information, from the second operation input means.

21. The content presentation system according to Claim 20,
wherein the operation log generation means generates a simplified operation log (LP) that stores a channel on which the content is delivered and a time point at which an operation is performed, instead of the content identifier (Cid) in the operation log of the slave content presentation device (110a), and the content attribute (Dca) includes information convertible into the content identifier (Cid) from the channel and the time point, and
wherein the operation log interpretation execution means of the master content presentation device (120a) uses the content attribute to convert the simplified operation log (LP) into an operation log.

22. The content presentation system (CPS8, CPS9) according to Claim 2 or Claim 3,
wherein the content presentation system further comprises a communication line and an operation log exchange server (3440),
wherein the master content presentation device (120h, 120i) is connected to the operation log exchange server (3440) via the communication line,
wherein the slave content presentation device (110h, 110i) is connected to the operation log exchange server (3440) via the communication line, and
wherein the operation log exchange server (3440) is implemented with a file exchange protocol, and sends the operation log (LOs) of the slave content presentation device (110h, 110i) to the master content presentation device (120h, 120i).

23. The content presentation system (CPS10) according to Claim 2 or Claim 3,
wherein the content attribute (Dca) includes detailed information having, as constituent elements, a set of a time position in a content and an attribute concerning the position, and
wherein the operation log interpretation execution means (3812) of the master content presentation device (120i) determines that a set of attributes, which are obtained by making a reference between the time position in the content included in the operation parameter of the operation log (LO) and the detailed information, are compatible with a user's preference.

24. The content presentation system (CPS11) according to Claim 2 or Claim 3,
wherein the content presentation system further includes a server (4240), and
wherein the operation log interpretation execution means (1223) of the master content presentation device (100_1) selects an operation log (LO) to be sent to the server (4240), and sends the selected operation log (LO) to the server (4240).

25. The content presentation system (CPS11) according to Claim 24,
wherein the server (4240) comprises a preference information extraction server (4241) and a customer information server (4242),
wherein the preference information extraction server (4241) retains the content attribute including the detailed information having, as constituent elements, a set of a time position in a content and an attribute concerning the position,
wherein the preference information extraction server (4241) determines that a set of attributes, which are obtained by making a reference between the time position in the content included in the operation parameter of the operation log (LO) from the master content presentation device (120a) and the detailed information, are compatible with a user's preference, and
wherein the customer information server (4242) receives, as an input, the determination result of the preference information extraction server (4241), and stores and manages the determination result for each user.

26. The content presentation system (CPS11) according to Claim 24,
wherein the server (4240) comprises a preference information extraction server (4241) and a detailed rating calculation server (4243),
wherein the preference information extraction server (4241) retains the content attribute including the detailed information having, as constituent elements, a set of a time position in a content and an attribute concerning the position,
wherein the preference information extraction server (4241) determines that a set of attributes, which are obtained by making a reference between the time position in the content included in the operation parameter of the operation log (LO) from the master content presentation device (120a; 100_n) and the detailed information, are compatible with a user's preference, and sends statistical information, from which information identifying a user is removed, to the detailed rating calculation server (4243), and
wherein the detailed rating calculation server (4243) calculates, based on the statistical information from the preference information extraction server (4242), a detailed rating with respect to the attribute concerning the position.

27. The content presentation system (CPS12) according to Claim 9,
wherein the operation log interpretation execution means of the master content presentation device (120a) merges the operation log (LOs) of the slave content presentation device (110a) with the operation log (LOm) of the master content presentation device (120a), and performs, based on the merging result, a fee charge process at a time for the content presentation including the content presentation in the slave content presentation device (110a) and the content presentation in the master content presentation device (120a).

28. The content presentation system (CPS12) according to Claim 27,
wherein when the merging process is performed, the operation log interpretation execution means of the master content presentation device (120a) uses a fee charge rule including a conditional price calculation rule to calculate a price for the content presentation.
